# EUROPEAN PATENT APPLICATION

(11) **EP 4 645 839 A1**
(43) Date of publication of application: **05.11.2025**
(21) Application number: 24799835.4
(22) Date of filing: 06.03.2024
(51) Int. Cl.: H04M 1/02, H05K 5/02, G06F 1/16

(54) **HOUSING ASSEMBLY AND FOLDABLE ELECTRONIC DEVICE**

(30) Priority: 04.05.2023 CN 202310496782
(71) Applicant: Honor Device Co., Ltd., Shenzhen, Guangdong 518040 (CN)
(72) Inventor: SUN, Jian, Shenzhen, Guangdong 518040 (CN)
(74) Representative: MERH-IP Matias Erny Reichl Hoffmann Patentanwälte PartG mbB
(86) International application number: PCT/CN2024/080262
(87) International publication number: WO 2024/227377

(57) **Abstract**

Embodiments of this application provide a housing assembly and a foldable electronic device. The foldable electronic device includes a rotating shaft mechanism. The housing assembly includes two middle frames that are rotatably disposed respectively on two sides of the rotating shaft mechanism, each of the middle frames includes a middle frame body and an injection molded part, and a side edge of the middle frame body defines a shaft region for disposing the rotating shaft mechanism. The middle frame body has a glue-pulling structure in the shaft region, the glue-pulling structure includes a glue-pulling groove and a glue-pulling cavity that are located on a same side of the middle frame body and that communicate with each other, and the glue-pulling cavity runs through the middle frame body to a side opposite to the glue-pulling groove. A size of the glue-pulling cavity on a side of the middle frame body facing a shaft cover of the rotating shaft mechanism is smaller than a size of the glue-pulling cavity on a side of the middle frame body away from the shaft cover. The injection molded part is filled in the glue-pulling groove and the glue-pulling cavity, and is constructed to support the shaft cover. The housing assembly of this application can meet a requirement of the foldable electronic device for glue-pulling strength of the middle frame body and the injection molded part in the middle frame while implementing thinning of the middle frame in the shaft region.

## Description

This application claims priority to Chinese Patent Application No. 202310496782.1, filed with the China National Intellectual Property Administration on May 04, 2023 and entitled "HOUSING ASSEMBLY AND FOLDABLE ELECTRONIC DEVICE", which is incorporated herein by reference in its entirety.

### TECHNICAL FIELD

This application relates to the field of electronic technologies, and in particular, to a housing assembly and a foldable electronic device.

### BACKGROUND

As a foldable electronic device such as a foldable-screen mobile phone is increasingly more complex, requirements for thinning and lightening the entire foldable electronic device become more prominent.

Using a foldable-screen mobile phone as an example, a foldable electronic device is usually provided with two middle frames and a rotating shaft mechanism. The rotating shaft mechanism is disposed between the two middle frames, and is connected to the two middle frames, so as to change a configuration of the foldable electronic device through relative rotation of the two middle frames. Currently, a side of the middle frame facing the rotating shaft mechanism has a shaft region in which the rotating shaft mechanism is disposed. The middle frame usually has, in the shaft region, a middle frame body and an injection molded part integrally formed in the middle frame body. The middle frame body usually has a metal structure in the shaft region. The injection molded part is located on a side of the middle frame body facing the rotating shaft mechanism, to support a shaft cover of the rotating shaft mechanism, so as to prevent the middle frame from directly touching the shaft cover when rotating relative to the shaft cover, thereby producing an abnormal sound. To meet the requirements for thinning and lightening the entire foldable electronic device, a challenge is raised to a thickness of the middle frame, and in particular, a thickness of the shaft region.

How to meet bonding strength between the middle frame body and the injection molded part of the middle frame in the shaft region while reducing the thickness of the middle frame in the shaft region becomes a technical problem to be resolved.

### SUMMARY

This application provides a housing assembly and a foldable electronic device. When a thickness of a middle frame in a shaft region is reduced, requirements of the foldable electronic device for glue-pulling strength and bonding strength between a middle frame body and an injection molded part of the middle frame in the shaft region can be met.

A first aspect of the embodiments of this application provides a housing assembly, applied to a foldable electronic device, the foldable electronic device includes a rotating shaft mechanism, the housing assembly includes two middle frames that are rotatably disposed respectively on two sides of the rotating shaft mechanism, each of the middle frames includes a middle frame body and an injection molded part, and a side edge of the middle frame body defines a shaft region for disposing the rotating shaft mechanism; the middle frame body has a glue-pulling structure in the shaft region, the glue-pulling structure includes a glue-pulling groove and a glue-pulling cavity that are located on a same side of the middle frame body and that communicate with each other, and the glue-pulling cavity runs through the middle frame body to a side opposite to the glue-pulling groove; a size of the glue-pulling cavity on a side of the middle frame body facing a shaft cover of the rotating shaft mechanism is smaller than a size of the glue-pulling cavity on a side of the middle frame body away from the shaft cover; and the injection molded part is filled in the glue-pulling groove and the glue-pulling cavity, and is constructed to support the shaft cover.

In this embodiment of this application, the glue-pulling groove and the glue-pulling cavity that communicate with each other in the glue-pulling structure are provided, and the size of the glue-pulling cavity on the side of the middle frame body facing the shaft cover is smaller than the size of the glue-pulling cavity on the side of the middle frame body away from the shaft cover, so that when the injection molded part is filled in the glue-pulling groove and the glue-pulling cavity, an injection structure fitting the structure of the glue-pulling groove and the structure of the glue-pulling cavity can be formed, so as to support the rotating shaft mechanism by using the injection molded part. With the glue-pulling cavity, at least a part of the thickness of the injection molded part can be hidden by using the thickness of the middle frame in the shaft region, so as to reduce the thickness of the middle frame in the shaft region, thereby thinning the middle frame in the shaft region. While meeting requirements for lightening and thinning the foldable electronic device in a new form, a glue-pulling area and glue-pulling strength between the injection molded part and the middle frame body can be further enhanced, so as to meet requirements of the foldable electronic device for bonding strength between the injection molded part and the middle frame body of the middle frame in the shaft region.

In addition, through fitting and connection between the injection molded part, the groove wall of the glue-pulling groove, and the cavity wall of the glue-pulling cavity, the injection molded part can further be prevented from being released from the middle frame body, so as to ensure stability of the structure of the middle frame.

In some optional implementations, the injection molded part includes an injection molded body and a glue-pulling portion that are connected to each other, the injection molded body is filled in the glue-pulling groove, the shaft cover and the glue-pulling portion are filled in the glue-pulling cavity, and both the injection molded body and the glue-pulling portion are constructed to support the shaft cover, so that while the injection molded part supports the shaft cover, at least a part of the thickness of the glue-pulling portion can be hidden by using the thickness of the middle frame in the shaft region, to reduce the thickness of the middle frame in the shaft region. In addition, through fitting between the glue-pulling groove and the injection molded body and fitting between the glue-pulling groove and the injection molded body, not only the glue-pulling area and the glue-pulling strength between the injection molded part and the middle frame body can be enhanced, but also the injection molded part can be prevented from being released from the middle frame body in different directions.

In some optional implementations, the middle frame body includes a middle plate and a side frame, the side frame is disposed around a peripheral side edge of a side of the middle plate away from the shaft cover, a side edge of the middle plate facing the shaft cover defines the shaft region, and the glue-pulling groove is located at an edge of the middle plate on a side of the shaft region, so that the injection molded body can be formed on the side of the middle plate in the shaft region, to ensure that the injection molded part supports the shaft cover.

In some optional implementations, at least a part of the glue-pulling groove is located at a position, of the middle plate in the shaft region, corresponding to the side frame, and an outer edge contour of the injection molded body fits a structure of the glue-pulling groove. In this way, the thickness of the side frame is used to form the glue-pulling groove in the shaft region, so that when the injection molded part supports the shaft cover, it is further beneficial to enhancing structural strength of the middle frame.

In some optional implementations, an outer edge shape of the glue-pulling portion fits a structure of the glue-pulling cavity, so that through fitting between the glue-pulling portion and the inner wall of the glue-pulling cavity, glue-pulling strength and bonding strength between the injection molded part and the middle frame body at the glue-pulling cavity are enhanced, and the injection molded part can further be prevented from being released from the side of the middle frame body facing the shaft cover.

In some optional implementations, the glue-pulling cavity includes a first position limiting cavity and a communicating cavity that communicate with each other, the first position limiting cavity is located on a lateral side of the glue-pulling groove, the communicating cavity and the glue-pulling groove are located on a same side of the middle frame body, and the communicating cavity runs through the middle frame body to a side opposite to the glue-pulling groove to communicate between the first position limiting cavity and the glue-pulling groove, so that while the glue-pulling cavity is in communication with the glue-pulling groove, the glue-pulling cavity can run through the middle frame body to the side opposite to the glue-pulling groove by using the communicating cavity, so that the injection molded part is filled in the glue-pulling groove, the communicating cavity, and the first position limiting cavity.

In some optional implementations, the first position limiting cavity is a through-hole on the middle frame body, a radial size of an end of the first position limiting cavity adjacent to the shaft cover is less than a radial size of an end of the first position limiting cavity away from the shaft cover, or a radial size of the first position limiting cavity is less than a radial size of the communicating cavity, so that the glue-pulling cavity can be formed after the first position limiting cavity communicates with the communicating cavity, to ensure that the size of the glue-pulling cavity on the side of the middle frame body facing the shaft cover is smaller than the size of the glue-pulling cavity on the side of the middle frame body away from the shaft cover, so that after the injection molded part is filled in the glue-pulling cavity, the glue-pulling area and the glue-pulling strength between the injection molded part and the middle frame body can be enhanced, so as to prevent the injection molded part from being released from the side of the middle frame body facing the shaft cover.

In some optional implementations, the first position limiting cavity is a horn hole whose radial size gradually decreases along an axial direction thereof, so as to ensure that the size of the glue-pulling cavity on the side of the middle frame body facing the shaft cover is smaller than the size of the glue-pulling cavity on the side of the middle frame body away from the shaft cover.

In some optional implementations, the first position limiting cavity is located on a side of the glue-pulling groove facing a middle portion of the middle frame body, so that after the injection molded part is filled in the first position limiting cavity, the thickness of the middle frame body in the shaft region can be used to hide at least a part of the thickness of the injection molded part, to thin the middle frame in the shaft region while ensuring that the injection molded part has a sufficient thickness and glue-pulling strength at the first position limiting cavity.

In some optional implementations, the glue-pulling structure further includes a second position limiting cavity, and the second position limiting cavity communicates with a lateral side of the communicating cavity and is located on a same side of the middle frame body as the glue-pulling groove; a radial size of an end of the second position limiting cavity adjacent to the shaft cover is greater than a radial size of an end of the second position limiting cavity away from the shaft cover; and the injection molded part is filled in the second position limiting cavity, so that the injection molded part can be further prevented from being released from the side of the middle frame body away from the shaft cover while enhancing the glue-pulling strength between the injection molded part and the middle frame body through fitting and connection between the injection molded part and the cavity wall of the second position limiting cavity.

In some optional implementations, the second position limiting cavity is a horn hole whose radial size gradually decreases along an axial direction thereof, so as to form a structure of the second position limiting cavity meeting requirements.

In some optional implementations, there are at least two first position limiting cavities, the at least two first position limiting cavities are symmetrically distributed on two sides of the glue-pulling groove, and the second position limiting cavity is located between two adjacent first position limiting cavities.

In this way, a quantity and disposition positions of the first position limiting cavities are limited, so that uniformity of the glue-pulling strength and the bonding strength between the injection molded part and the middle frame body can be enhanced. In addition, space between the middle frame body and the two first position limiting cavities is properly used, to implement disposition of the second position limiting cavity on the middle frame body.

In some optional implementations, the first position limiting cavity is located on a side of the middle frame body opposite to the glue-pulling groove, and a radial size of the first position limiting cavity is greater than a radial size of the communicating cavity, so that the glue-pulling cavity can be formed after the first position limiting cavity communicates with the communicating cavity, to ensure that the size of the glue-pulling cavity on the side of the middle frame body facing the shaft cover is smaller than the size of the glue-pulling cavity on the side of the middle frame body away from the shaft cover, so that after the injection molded part is filled in the glue-pulling cavity, the glue-pulling area and the glue-pulling strength between the injection molded part and the middle frame body can be enhanced, so as to prevent the injection molded part from being released from the side of the middle frame body facing the shaft cover.

In some optional implementations, the first position limiting cavity is a groove located on a lateral side of the communicating cavity, a groove bottom of the groove communicates with the communicating cavity, and a groove opening of the groove faces a side away from the glue-pulling groove, so that while the glue-pulling cavity is in communication with the glue-pulling groove, a size of an aperture of the communicating cavity on the side of the middle frame body facing the rear cover can be reduced, helping reduce a crack area on the middle frame body.

In some optional implementations, the communicating cavity is located on a side of the glue-pulling groove away from an edge of the middle frame body, and the first position limiting cavity is located on a side of the communicating cavity away from the glue-pulling groove, so that while it is ensured that the injection molded part can support the shaft cover, on the side of the middle frame body facing the rear cover of the foldable electronic device, the injection molded part can be located as far as possible away from a fitting surface of the middle frame body fitting with the rear cover, thereby helping to prevent the injection molded part from being exposed outside the foldable electronic device.

In some optional implementations, both the first position limiting cavity and the communicating cavity are located within a projection range of a rear cover of the foldable electronic device on the middle frame body, so as to prevent the injection molded part from being exposed outside the foldable electronic device.

In some optional implementations, both the groove bottom of the groove and a groove bottom of the glue-pulling groove are flat surfaces on the middle frame body, so that the injection molded part can be in flat contact with the middle frame body at the groove bottom of the groove and the groove bottom of the glue-pulling groove, and glue-pulling strength between the injection molded part and the middle frame body is enhanced, so that the injection molded part can be snapped onto two sides of the middle frame body, to prevent the injection molded part from being released from the middle frame body.

In some optional implementations, the groove bottom of the first position limiting cavity further has a reinforcing groove, so that without affecting the thickness of the middle frame at the first position limiting cavity, the structural strength of the middle frame at the first position limiting cavity can be enhanced through fitting and connection between the injection molded part and the groove wall of the reinforcing groove.

In some optional implementations, there are at least two communicating cavities, and the at least two communicating cavities are symmetrically distributed on two sides of the glue-pulling groove, to improve uniformity of the glue-pulling strength and the bonding strength between the injection molded part and the middle frame body.

In some optional implementations, the groove bottom of the glue-pulling groove further has a second reinforcing protrusion, and the second reinforcing protrusion is located between two adjacent communicating cavities and is connected to the injection molded part, so as to also enhance structural strength of the middle frame at a position of the second reinforcing protrusion while enhancing bonding strength between the middle frame body and the injection molded part.

In some optional implementations, the groove bottom of the glue-pulling groove is an inclined surface that is on the middle frame body and that is inclined to a side edge of the side frame of the middle frame body, so as to further reduce the thickness of the middle frame at the injection molded part in the shaft region by using the thickness of the side frame.

In some optional implementation manners, there are several glue-pulling structures, and the several glue-pulling structures are disposed in the shaft region at intervals in an axial direction of the shaft cover, so that one injection molded part is formed in each glue-pulling structure, and a support effect of the injection molded part on the shaft cover is enhanced.

A second aspect of the embodiments of this application provides a foldable electronic device. The foldable electronic device includes a rotating shaft mechanism and the housing assembly according to any one of the foregoing aspects. The rotating shaft mechanism includes a shaft cover. The shaft cover is located in shaft regions of two middle frames in the housing assembly. The two middle frames are disposed on two sides of the shaft cover for rotation.

According to this embodiment of this application, the housing assembly in the foldable electronic device is disposed, so that not only switching of the foldable electronic device between a flattened state and a folded state can be implemented in fitting with the rotating shaft mechanism, but also lightening and thinning of the foldable electronic device in the shaft region of the middle frame on one side can be implemented, so as to meet a design requirement of a new form of the foldable electronic device, and also meet requirements of the foldable electronic device for glue-pulling strength and bonding strength between the middle frame body and the injection molded part of the middle frame.

### BRIEF DESCRIPTION OF DRAWINGS

FIG. 1 is a schematic structural diagram of a foldable electronic device according to an embodiment of this application;
FIG. 2 is a schematic structural diagram of the foldable electronic device in FIG. 1 in a folded state;
FIG. 3 is a schematic structural diagram of the foldable electronic device in FIG. 1 in a flattened state;
FIG. 4 is a schematic structural diagram of another foldable electronic device according to an embodiment of this application;
FIG. 5 is a schematic structural diagram of another foldable electronic device in a folded state according to an embodiment of this application;
FIG. 6 is a first cross sectional view of a middle frame at an injection molded part in a shaft region according to the related art;
FIG. 7 is a second cross sectional view of a middle frame at an injection molded part in a shaft region according to the related art;
FIG. 8 is a schematic structural diagram of an injection molded part at a first perspective according to the related art;
FIG. 9 is a schematic structural diagram of an injection molded part at a second perspective according to the related art;
FIG. 10 is an exploded view of assembling a middle frame on a side of a foldable electronic device according to an embodiment of this application;
FIG. 11 is a diagram of an assembly effect of a middle frame on a side of a foldable electronic device according to an embodiment of this application;
FIG. 12 is an exploded view of a middle frame on a glue-pulling structure in a shaft region according to an embodiment of this application;
FIG. 13 is a first assembly diagram of an injection molded part in FIG. 12 on a middle frame body;
FIG. 14 is a second assembly diagram of an injection molded part in FIG. 12 on a middle frame body;
FIG. 15 is a cross sectional view of a middle frame in FIG. 13 at an injection molded part;
FIG. 16 is a schematic structural diagram of a middle frame on a shaft cover side;
FIG. 17 is a schematic structural diagram of a middle frame on a rear cover side;
FIG. 18 is a first schematic structural diagram of a middle frame body at a glue-pulling structure according to an embodiment of this application;
FIG. 19 is a second schematic structural diagram of a middle frame body at a glue-pulling structure according to an embodiment of this application;
FIG. 20 is a third schematic structural diagram of a middle frame body at a glue-pulling structure according to an embodiment of this application;
FIG. 21 is a schematic structural diagram of an injection molded part in FIG. 12 at a first perspective;
FIG. 22 is a schematic structural diagram of an injection molded part in FIG. 12 at a second perspective;
FIG. 23 is a schematic structural diagram of an injection molded part in FIG. 12 at a third perspective;
FIG. 24 is a schematic structural diagram of an injection molded part in FIG. 12 at a fourth perspective;
FIG. 25 is an exploded view of another middle frame at a glue-pulling structure according to an embodiment of this application;
FIG. 26 is a first assembly diagram of an injection molded part in FIG. 25 in a middle frame body;
FIG. 27 is a second assembly diagram of an injection molded part in FIG. 25 in a middle frame body;
FIG. 28 is a schematic structural diagram of an injection molded part in FIG. 25 at a first perspective;
FIG. 29 is a schematic structural diagram of an injection molded part in FIG. 25 at a second perspective;
FIG. 30 is a schematic structural diagram of an injection molded part in FIG. 25 at a second perspective;
FIG. 31 is a cross sectional view of a middle frame in FIG. 16 at an injection molded part;
FIG. 32 is a first exploded view of still another middle frame at a glue-pulling structure according to an embodiment of this application;
FIG. 33 is a second exploded view of still another middle frame at a glue-pulling structure according to an embodiment of this application;
FIG. 34 is a schematic structural diagram of a middle frame in FIG. 32 at an injection molded part;
FIG. 35 is a schematic structural diagram of a middle frame in FIG. 33 at an injection molded part;
FIG. 36 is a schematic structural diagram of an injection molded part in FIG. 33 at a first perspective;
FIG. 37 is a schematic structural diagram of an injection molded part in FIG. 33 at a second perspective;
FIG. 38 is a schematic structural diagram of an injection molded part in FIG. 33 at a third perspective;
FIG. 39 is a schematic structural diagram of an injection molded part in FIG. 33 at a fourth perspective;
FIG. 40 is an assembly view of a middle frame in FIG. 17 and a rear cover;
FIG. 41 is a cross sectional view of a middle frame in FIG. 40 at an injection molded part;
FIG. 42 is a first cross sectional view of an injection molded part after a rear cover is assembled on a middle frame in FIG. 34;
FIG. 43 is a second cross sectional view of an injection molded part after a rear cover is assembled on a middle frame in FIG. 34;
FIG. 44 is a first schematic diagram of still another middle frame body at a glue-pulling structure according to an embodiment of this application;
FIG. 45 is a second schematic structural diagram of still another middle frame body at a glue-pulling structure according to an embodiment of this application; and
FIG. 46 is a schematic structural diagram of yet another middle frame body at a glue-pulling structure according to an embodiment of this application.

Description of reference numerals in the accompanying drawings:
100-foldable electronic device; 1-middle frame; 11-middle frame body; 111-middle plate; 1111-inclined surface; 112-side frame; 1121-fitting surface; 113-shaft region; 114-glue-pulling structure; 1141-glue-pulling groove; 1142-second reinforcing protrusion; 1143-glue-pulling cavity; 1144, 1147-first position limiting cavity; 1145, 1146-communicating cavity; 1148-reinforcing groove; 1149-second position limiting cavity; 115-avoidance groove;
12-injection molded part; 121-injection molded body; 122-glue-pulling portion; 1221, 1224-first glue-pulling portion; 1222, 1223-connecting portion; 1225-first reinforcing protrusion; 123-second glue-pulling portion; 124-undercut portion;
2-rotating shaft mechanism; 21-shaft cover; 3-rear cover; 4-foldable screen; and 5-rigid display screen.

### DESCRIPTION OF EMBODIMENTS

Terms used in implementations in this application are merely intended to explain specific embodiments of this application rather than being intended to limit this application.

Embodiments of this application provide a foldable electronic device. The foldable electronic device may include, but is not limited to, a foldable fixed terminal or mobile terminal such as a foldable-screen mobile phone, a tablet computer (that is, a pad), a notebook computer, a personal computer (personal computer, PC), an ultra-mobile personal computer (ultra-mobile personal computer, UMPC), or an intelligent wearable device.

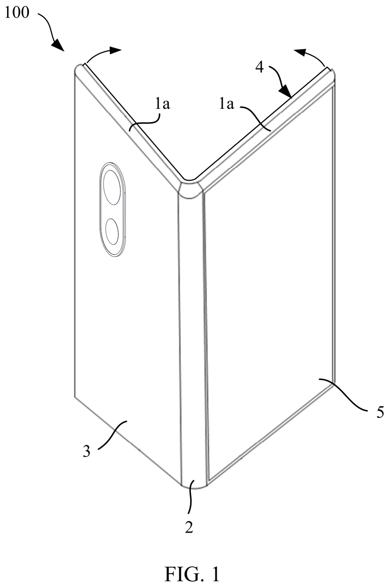

FIG. 1 to FIG. 3 are respectively schematic structural diagrams of a foldable electronic device 100 in different configurations.

Referring to FIG. 1 to FIG. 3, the foldable electronic device 100 further includes a rotating shaft mechanism 2 and two middle frames 1. The two middle frames 1 are rotatably connected on two opposite sides of the rotating shaft mechanism 2, so that the two middle frames 1 can rotate relative to each other around the rotating shaft mechanism 2, thereby changing a configuration of the foldable electronic device 100.

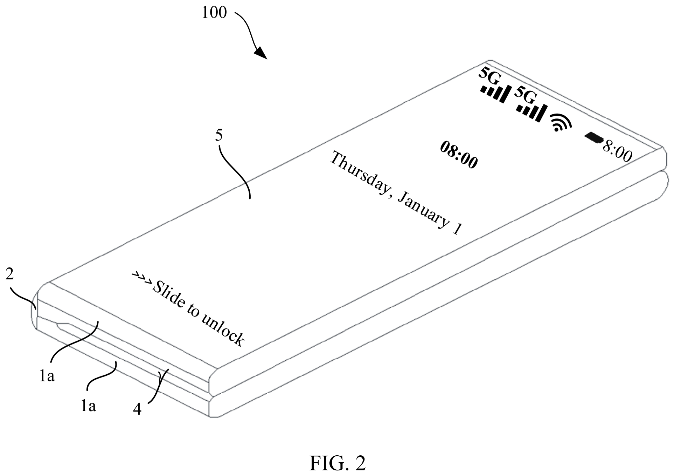

For example, when the two middle frames 1 move toward each other relative to the rotating shaft mechanism 2 along a direction shown by an arrow in FIG. 1, the foldable electronic device 100 can present a folded state shown in FIG. 2. As shown in FIG. 2, when the foldable electronic device 100 is in the folded state, the two middle frames 1 are stacked on each other.

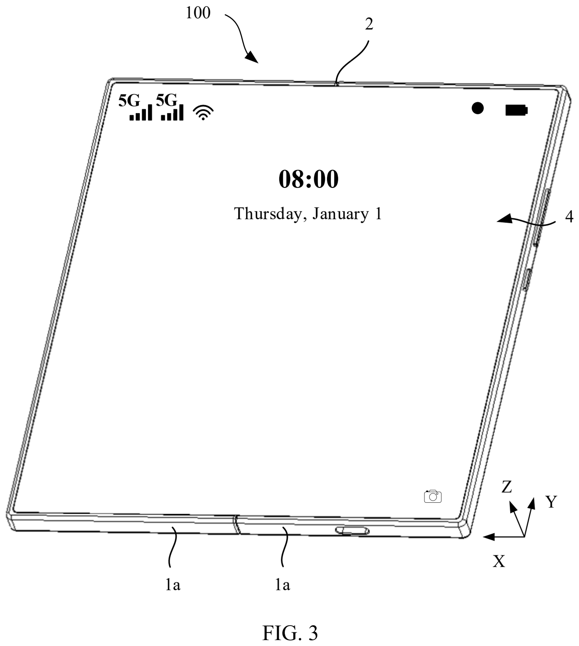

When the two middle frames 1 move away from each other along a direction opposite to the direction shown by arrow in FIG. 1, the foldable electronic device 100 can present a flattened state shown in FIG. 3. As shown in FIG. 3, when the foldable electronic device 100 is in the flattened state, the two middle frames 1 cannot continue to rotate along the direction opposite to the direction shown by the arrow in FIG. 1. In this case, the two middle frames 1 are in a same plane. It should be noted that, for a connection manner between the two middle frames 1 and the rotating shaft mechanism 2, reference may be made to related descriptions in an existing foldable electronic device (such as a foldable mobile phone), which is not further described herein.

The foldable electronic device 100 may further include a rear cover 3. In some embodiments, the rear cover 3 may be disposed on one of the middle frames 1 (as shown in FIG. 1). Alternatively, in some other embodiments, the rear cover 3 may cover the two middle frames 1 at the same time. A covering position of the rear cover 3 on the foldable electronic device 100 is not further limited in this application. The rear cover 3 can enclose an accommodating cavity with at least one middle frame 1. The accommodating cavity can accommodate functional components, such as a circuit board, a battery, a camera module, a microphone, and a speaker, of the foldable electronic device 100.

When the foldable electronic device 100 has a display function (for example, the foldable electronic device 100 is a foldable mobile phone), the foldable electronic device 100 may further include a display assembly (not shown in the figure), and the display assembly may be electrically connected to the circuit board, so as to implement display of the display assembly and an operation function of a user on the display assembly.

The structure of the foldable electronic device 100 in this application is further described below by using a foldable mobile phone as an example.

Referring to FIG. 1 to FIG. 3, the display assembly may include a foldable screen 4, and the foldable screen 4 may be a flexible display screen. The foldable screen 4 may cover a same side of the two middle frames 1 and is connected to peripheral side edges of the two middle frames 1, so as to assemble the foldable screen 4 on the foldable electronic device 100.

It should be noted that, when the configuration of the foldable electronic device 100 changes, the form of the foldable screen 4 also changes accordingly. For example, when the foldable electronic device 100 is in the folded state, the folded screen 4 is also folded into the folded state. When the foldable electronic device 100 is in the flattened state, the folded screen 4 is also unfolded into the flattened state.

In some embodiments, the two middle frames 1 may both move toward a side on which the foldable screen 4 is located to fold, so that the foldable electronic device 100 is in the folded state, and the foldable screen 4 may be located inside the foldable electronic device 100 in the folded state (as shown in FIG. 2). In this case, the foldable electronic device 100 may be referred to as an inward-foldable screen electronic device.

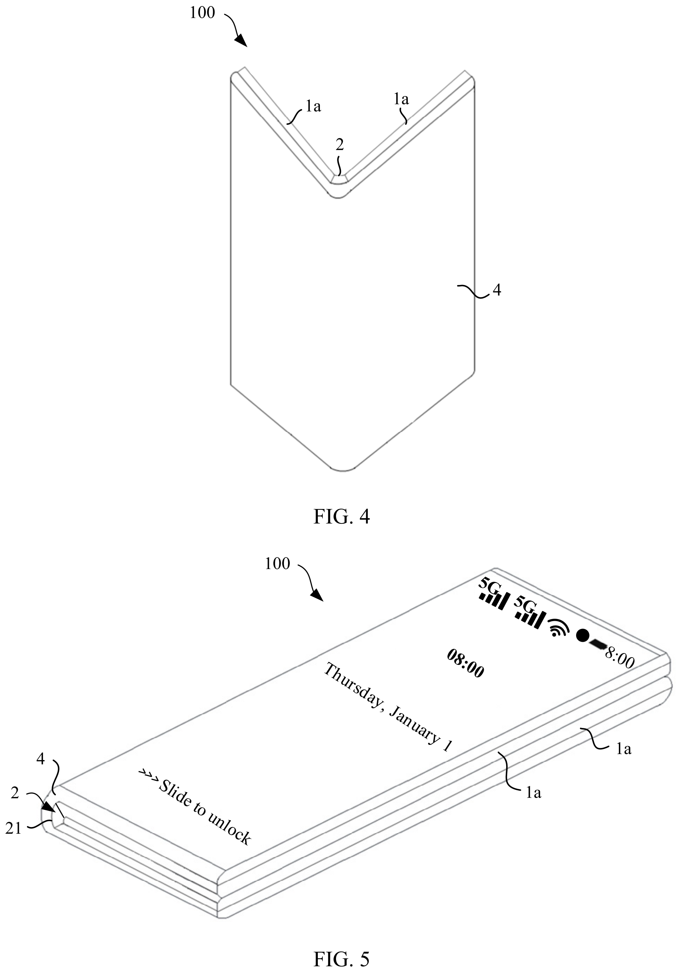

FIG. 4 is a schematic structural diagram of another foldable electronic device 100. FIG. 5 is a schematic structural diagram of the foldable electronic device 100 in FIG. 4 in a folded state.

Referring to FIG. 4 and FIG. 5, in some embodiments, the two middle frames 1 may both move toward a side away from the foldable screen 4 to fold, so that the foldable electronic device 100 is in the folded state, and the foldable screen 4 may still be in the folded state, but is completely exposed to the outside of the foldable electronic device 100. In this case, the foldable electronic device 100 may be referred to as an outward-foldable screen electronic device.

The structure of the foldable electronic device 100 in this application is further described below by using an inward-foldable screen electronic device as an example.

When the foldable electronic device 100 is an inward-foldable screen electronic device (such as an inward-foldable screen mobile phone), in addition to the foldable screen 4, the display assembly may further include a rigid display screen 5, the rigid display screen 5 and the rear cover 3 may be respectively disposed on one middle frame 1, and the rigid display screen 5 and the rear cover 3 are located on same sides of the two middle frames 1.

Referring to FIG. 5, the rotating shaft mechanism 2 generally includes a shaft cover 21, a synchronous rotation component (not shown in the figure), and a door raising and lowering component (not shown in the figure). The shaft cover 21 is a strip-shaped structure extending along a length direction (for example, a Y direction) of the foldable electronic device 100. A side of the shaft cover 21 facing the foldable screen 4 has an accommodating groove (not shown in the figure), and the synchronous rotation component, the door raising and lowering assembly, and the like are assembled in the accommodating groove. The shaft cover 21 is disposed between the two middle frames 1, and when the two middle frames 1 rotate around the rotating shaft mechanism 2, a position of the shaft cover 21 may be kept fixed relatively, and the two middle frames 1 rotate relative to the shaft cover 21.

For a width direction of the electronic device, refer to an X direction in FIG. 3, and for a thickness direction of the electronic device, refer to a Z direction in FIG. 3.

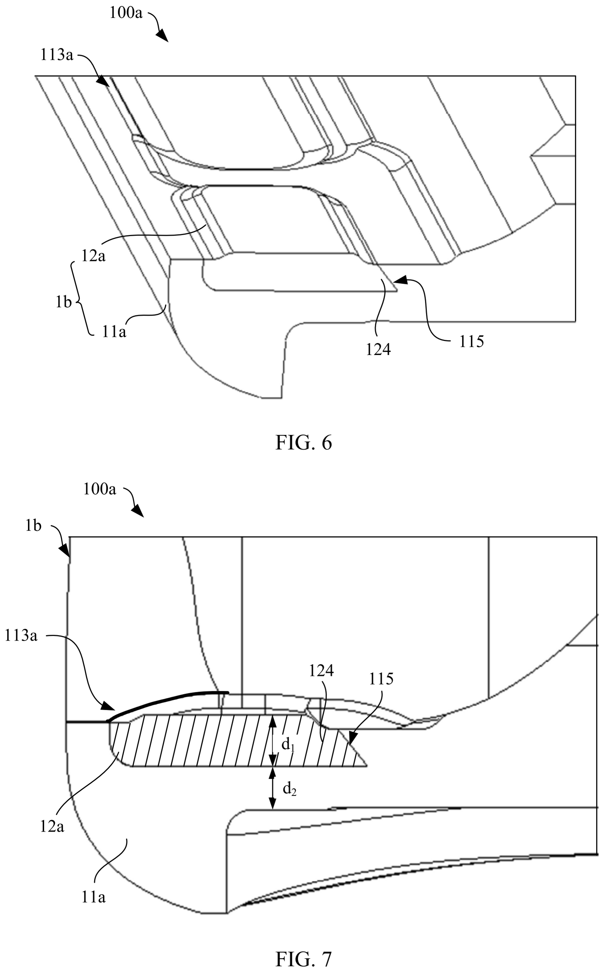

FIG. 6 and FIG. 7 respectively show cross-sectional views of a same middle frame 1a at an injection molded part 12 in a shaft region 113a under different viewing angles in the related technology.

Referring to FIG. 6 and FIG. 7, two middle frames 1a each have, on a side facing the rotating shaft mechanism 2 (not shown in the figure), a shaft region 113a provided with the rotating shaft mechanism 2 (not shown in the figure). The shaft cover 21 (not shown in the figure) is disposed on the shaft region 113a of the two middle frames 1a, and the shaft cover 21 is usually a metal cover. The middle frame 1a usually has a middle frame body 11a and an injection molded part 12a in the shaft region 113a. The middle frame body 11a may be understood as another structure of the middle frame 1a except the injection molded part 12a in the shaft region 113a. The middle frame body 11a is generally of a metal structure in the shaft region 113a. The injection molded part 12a is integrally formed in a groove body (not marked in the figure) of the middle frame body 11a in the shaft region 113a through injection, and projects out of the middle frame body 11a to support the shaft cover 21, so as to avoid that the metal structure and the shaft cover 21 directly contact and collide with each other when the middle frame 1a rotates relative to the shaft cover 21, thereby improving user experience of the foldable electronic device 100a.

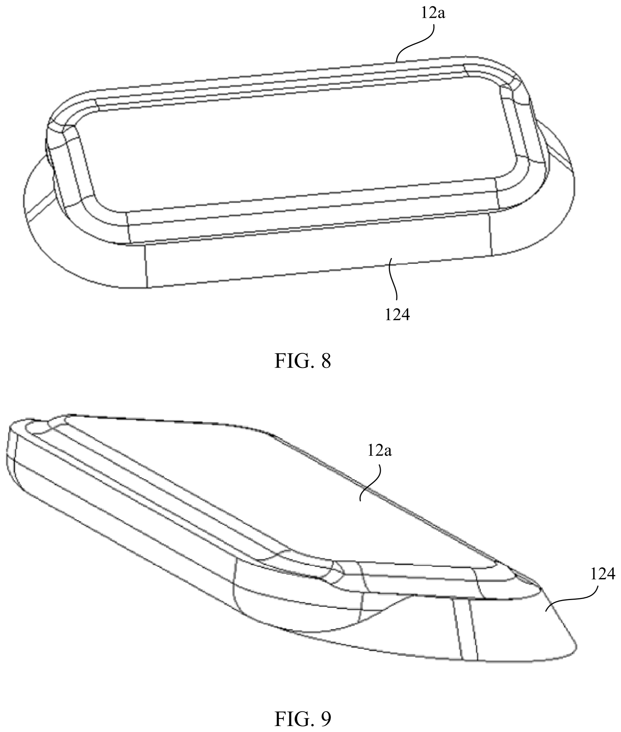

FIG. 8 and FIG. 9 are respectively schematic structural diagrams of the injection molded part 12a in FIG. 7 at different viewing angles.

Referring to FIG. 8 and FIG. 9 with reference to FIG. 7, to meet glue-pulling strength between the injection molded part 12a and the middle frame body 11a, a side edge of the injection molded part 12a has an undercut portion 124, and the undercut portion 124 is an expanded structure that is on the injection molded part 12a and that expands toward the outside. Correspondingly, the groove body also has an avoidance groove 115 fitting the undercut portion 124, so that the undercut portion 124 is formed in the avoidance groove 115. Through fitting between the undercut portion 124 and the avoidance groove 115, glue-pulling strength between the injection molded part 12a and the middle frame body 11a is increased.

As the foldable electronic device 100a such as a foldable-screen mobile phone is increasingly more complex, requirements for thinning and lightening the entire foldable electronic device 100a become more prominent.

Because two middle frames 1a are distributed on two sides of the foldable electronic device 100a, the thickness of the middle frame 1a has vital impact on the thickness of the foldable electronic device 100a on one side (single side). For a direction in which the thickness of the middle frame 1a is located, refer to the foregoing Z direction.

Referring to FIG. 7, in the existing related technology, the foldable electronic device 100a has a relatively large thickness on one side. For example, a thickness d₁ of the injection molded part 12a in the shaft region 113a of the middle frame 1a is generally 0.45 mm. When the foldable electronic device 100a is in mass production, the thickness d₁ of the injection molded part 12a is generally more than 0.3 mm. A thickness d₂ of a metal structure at a position in which the middle frame body 11a is embedded with the injection molded part 12 is generally 0.35 mm. When the foldable electronic device 100a is in mass production, the thickness d₂ of the metal structure is generally 0.30 or more than 0.33 mm, so that the thickness of the injection molded part 12a disposed in the shaft region 113a of the middle frame 1a is generally more than 0.6 mm, so that the middle frame body 11a and the injection molded part 12a are detached in the shaft region 113a. In this way, the thickness of the shaft region 113a of the existing middle frame 1a at the position of the injection molded part 12a is relatively thick, and it is difficult to meet a requirement of the foldable electronic device 100a for lightening and thinning a new form.

In a lightening and thinning requirement of the foldable electronic device 100a for a new form, the thickness of the foldable electronic device 100a on one side may be close to 5 mm, and the thickness of the injection molded part 12a disposed in the shaft region 113a of the middle frame 1a needs to be controlled within 0.6 mm.

This poses a challenge to the thickness design of the middle frame 1a (in particular, the thickness of the shaft region 113a), and in particular, challenges the thickness of the middle frame 1a in the shaft region 113a while ensuring that the shaft region 113a includes the middle frame body 11a and the injection molded part 12a. In addition, if structural strength of the middle frame 1a is sacrificed, and a hole is formed in the middle frame body 11a to reduce the thickness of the middle frame 1a, a design of the existing undercut portion 124 cannot far meet a requirement of the foldable electronic device 100a for bonding strength between the injection molded part 12a and the middle frame body 11a.

Therefore, how to meet the bonding strength between the middle frame body 11a and the injection molded part 12a in the shaft region 113a while thinning the middle frame 1a in the shaft region 113a has become a to-be-resolved technical problem.

In view of this, an embodiment of this application provides a housing assembly. The housing assembly may be applied to a foldable electronic device 100. Through the disposition of the glue-pulling structure 114 and the injection molded part 12 of the middle frame 1 in the housing assembly in the shaft region 113, when the thickness of the middle frame 1 in the shaft region 113 is thinned, it is beneficial to meeting the bonding strength between the middle frame body 11 and the injection molded part 12 in the shaft region 113.

The following further describes the structure of the housing assembly of this application with reference to the accompanying drawings and embodiments.

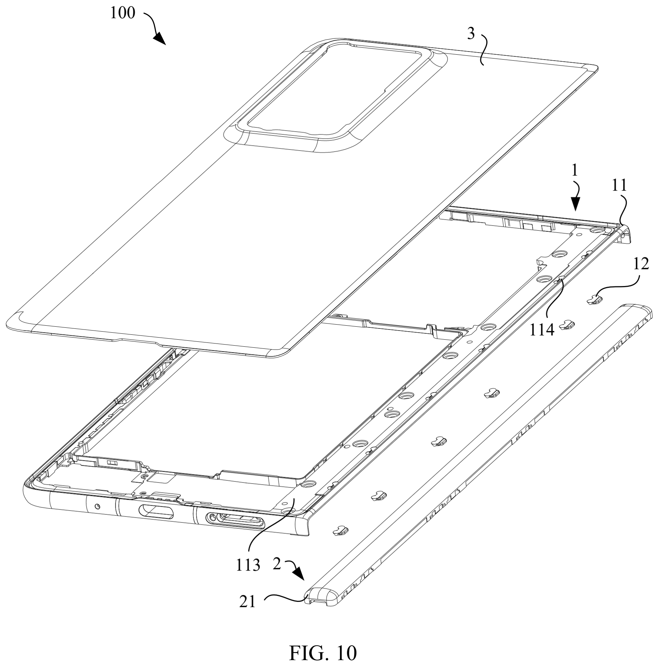

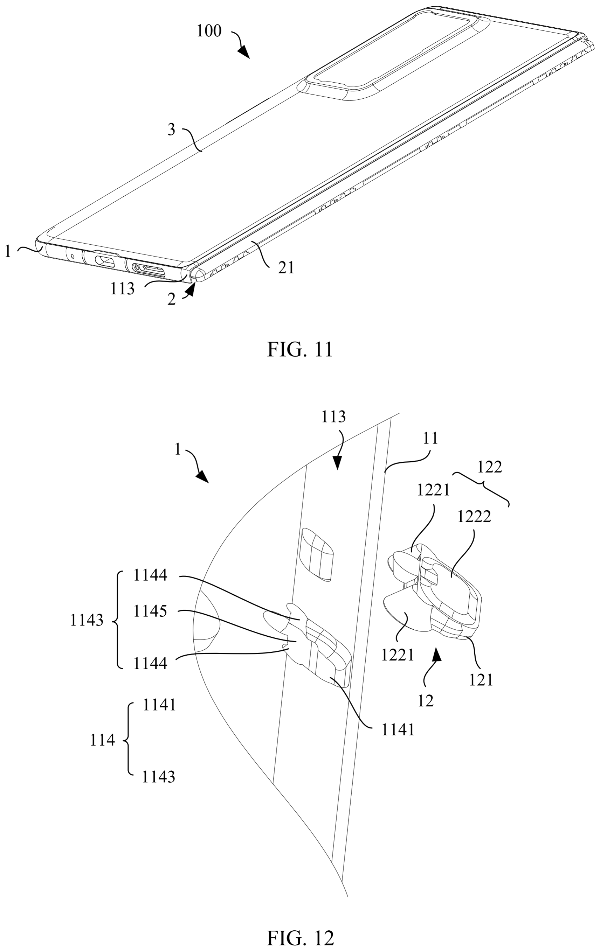

FIG. 10 is an assembly exploded view of a middle frame 1 on a side of a foldable electronic device 100, and FIG. 11 is an assembly effect view of a middle frame 1 on a side of a foldable electronic device 100.

As described above, the foldable electronic device 100 includes a rotating shaft mechanism 2. Referring to FIG. 10 and FIG. 11, the housing assembly includes two middle frames 1 that are rotatably disposed respectively on two sides of the rotating shaft mechanism 2. Only one middle frame 1 is shown in the figure, to simplify a structure of the housing assembly. By rotation of the two middle frames 1 relative to the rotating shaft mechanism 2, a configuration of the housing assembly can be changed, so that the housing assembly switches between the folded state and the flattened state with the foldable electronic device 100.

Each middle frame 1 includes a middle frame body 11, and one side edge of the middle frame body 11 defines a shaft region 113 for disposing the rotating shaft mechanism 2, so that the rotating shaft mechanism 2 can be disposed in shaft regions 113 of the two middle frames 1 at the same time, thereby implementing rotatable connection between the two middle frames 1 and the rotating shaft mechanism 2. The rear cover 3 of the foldable electronic device 100 may cover a side of the middle frame 1 far away from the rotating shaft mechanism 2. For assembly effects of the middle frame 1, the rear cover 3, and the rotating shaft mechanism 2, refer to FIG. 11.

Regions of the shaft regions 113 of the two middle frames 1 corresponding to the shaft cover 21 are each provided with a contour structure matching an outer edge contour of the shaft cover 21. For example, an outer edge contour of a corresponding shaft region 113 of the shaft cover 21 is an arc shape, and surfaces of the two middle frames 1 in the shaft region 113 are also an arc shape matching the outer edge contour of the shaft cover 21.

FIG. 12 is an exploded structure of the middle frame 1 on a glue-pulling structure 114 of the shaft region 113 at a viewing angle of a side of the shaft cover 21.

Referring to FIG. 12, the middle frame body 11 has a glue-pulling structure 114 in the shaft region 113, the glue-pulling structure 114 includes a glue-pulling groove 1141 and a glue-pulling cavity 1143 that are located on a same side of the middle frame body 11 and that communicate with each other, and the glue-pulling cavity 1143 runs through the middle frame body 11 to a side opposite to the glue-pulling groove 1141.

A size of the glue-pulling cavity 1143 on a side of the middle frame body 11 facing the shaft cover 21 is smaller than a size of the glue-pulling cavity 1143 on a side of the middle frame body 11 away from the shaft cover 21. The size of the glue-pulling cavity 1143 on the middle frame body 11 may include a size of an opening (for example, a length or a width of the opening) of the glue-pulling cavity 1143 on the middle frame body 11. The middle frame 1 further includes an injection molded part 12. The injection molded part 12 is filled in the glue-pulling groove 1141 and the glue-pulling cavity 1143, and is configured to support the shaft cover 21.

It should be noted that, same as the middle frame body 11a in the related technology, the middle frame body 11 in this application may also be understood as a remaining structure in the middle frame 1 except the injection molded part 12 supporting the shaft cover 21. The middle frame body 11 may be a metal middle frame, or the middle frame body 11 may be a middle frame structure formed by injection of metal and plastic. In this application, a structure and a material of the middle frame body 11 are not further limited.

The middle frame body 11 is generally of a metal structure in the shaft region 113. In this way, the injection molded part 12 supports the shaft cover 21, so that a part of the middle frame body 11 in the shaft region 113 can be prevented from directly touching the shaft cover 21 when rotating relative to the shaft cover 21, and generating an abnormal sound, thereby improving user experience of the foldable electronic device 100.

Because the glue-pulling groove 1141 and the glue-pulling cavity 1143 communicate with each other, and the size of the glue-pulling cavity 1143 on the side of the middle frame body 11 facing the shaft cover 21 is smaller than the size of the glue-pulling cavity 1143 on the side of the middle frame body 11 away from the shaft cover 21, after an injection process, the injection molded part 12 can be filled in the glue-pulling groove 1141 and the glue-pulling cavity 1143, and form an injection structure matching (same as or similar to) the structures of the glue-pulling groove 1141 and the glue-pulling cavity 1143.

In this way, due to existence of the glue-pulling cavity 1143, after being filled in the glue-pulling cavity 1143, the injection molded part 12 can share the thickness of the middle frame body 11 in the shaft region 113 with the middle frame body 11, so as to hide at least a part of the thickness of the injection molded part 12 by using the thickness of the middle frame body 11 in the shaft region 113, to reduce the thickness of the middle frame 1 in the shaft region 113, to reduce the thickness of the middle frame 1 in the shaft region 113, and meet requirements of the foldable electronic device 100 for lightening and thinning a new form and on strength of the middle frame 1.

In addition, after the injection molded part 12 is filled in the glue-pulling cavity 1143, it can further be ensured that a partial structure of the injection molded part 12 in the glue-pulling cavity 1143 has a sufficient thickness, so as to meet a requirement of the middle frame 1 for glue-pulling strength between the injection molded part 12 and the middle frame body 11.

In addition, based on the glue-pulling groove 1141, through disposition of the glue-pulling cavity 1143, compared with the foregoing existing structure of the injection molded part 12a, glue-pulling areas between the middle frame body 11 and the injection molded part 12 in the X direction and the Y direction of the foldable electronic device 100 can be increased, and glue-pulling strength and bonding strength between the injection molded part 12 and the middle frame body 11 can be enhanced, so as to meet requirements of the foldable electronic device 100 on glue-pulling strength and bonding strength between the injection molded part 12 and the middle frame body 11 in the shaft region 113 of the middle frame 1.

In addition, through fitting and connection between the injection molded part 12 and the groove wall of the glue-pulling groove 1141, the injection molded part 12 can be snapped onto the middle frame body 11, so as to prevent the injection molded part 12 from being released from the side of the middle frame body 11 away from the shaft cover 21 (a side facing the rear cover 3). Through fitting and connection between the injection molded part 12 and the cavity wall of the glue-pulling cavity 1143, the injection molded part 12 can further be prevented from being released from the side of the middle frame body 11 facing the shaft cover 21. Therefore, in this application, through disposition of the glue-pulling groove 1141 and the glue-pulling cavity 1143, the injection molded part 12 can be stably disposed in the middle frame body 11, to ensure stability of the structure of the middle frame 1.

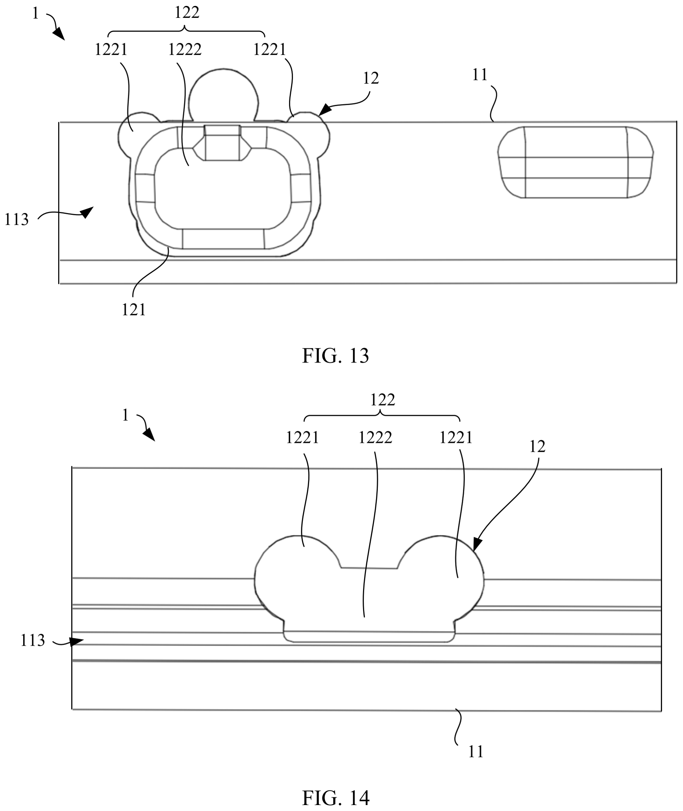

FIG. 13 is an assembly diagram of the injection molded part 12 in FIG. 12 on the side of the middle frame body 11 facing the shaft cover 21, and FIG. 14 is an assembly diagram of the injection molded part 12 in FIG. 12 on the side of the middle frame body 11 facing a battery cover, to understand an assembly effect of the injection molded part 12 in the glue-pulling structure 114.

Referring to FIG. 12 and with reference to FIG. 13 or FIG. 14, the injection molded part 12 includes an injection molded body 121 and a glue-pulling portion 122 that are connected to each other. The injection molded body 121 is filled in the glue-pulling groove 1141, and the glue-pulling portion 122 is filled in the glue-pulling cavity 1143. The injection molded body 121 and the glue-pulling portion 122 are both configured to support the shaft cover 21, so that the injection molded part 12 supports the shaft cover 21. In a process of rotating relative to the shaft cover 21 by the middle frame 1, the injection molded body 121 and the glue-pulling portion 122 may separately or simultaneously support the shaft cover 21, which is not further limited herein.

Referring to FIG. 12 with reference to FIG. 13, through fitting and connection between the injection molded body 121 and the glue-pulling groove 1141, the injection molded body 121 is snapped onto the middle frame body 11 in the glue-pulling groove 1141, so as to prevent the injection molded part 12 from being released from the side of the middle frame body 11 away from the shaft cover 21.

An outer edge contour of the injection molded body 121 matches a structure of the glue-pulling groove 1141 (not marked in the figure). That is, the outer edge contour of the injection molded body 121 matches the structure of the glue-pulling groove 1141.

Referring to FIG. 12 and with reference to FIG. 14, because the glue-pulling portion 122 is filled in the glue-pulling cavity 1143, a shape of the outer edge of the glue-pulling portion 122 fits the structure of the glue-pulling cavity 1143 (not marked in the figure), so that a size of the glue-pulling portion 122 on a side facing the shaft cover 21 is greater than a size of the glue-pulling portion 122 on a side away from the shaft cover 21. In this way, through fitting between the glue-pulling portion 122 and the cavity wall of the glue-pulling cavity 1143, the injection molded part 12 can be limited in the middle frame body 11, so that the injection molded part 12 cannot be released from the side of the middle frame body 11 facing the shaft cover 21.

Therefore, in this application, the injection molded part 12 can be limited in the middle frame body 11 from different directions, thereby improving stability of the structure of the middle frame 1.

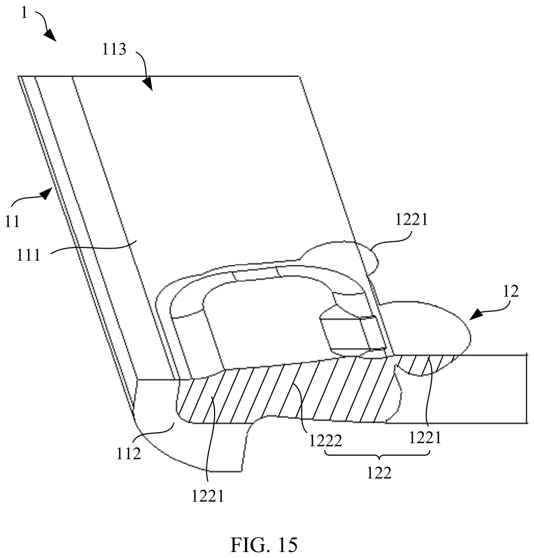

FIG. 15 is a cross sectional view of a middle frame 1 in FIG. 13 at an injection molded part 12.

Referring to FIG. 15, on such a basis, through disposition of the glue-pulling cavity 1143, after the glue-pulling portion 122 is filled in the glue-pulling cavity 1143, a thickness of the middle frame body 11 in the shaft region 113 can be shared with the middle frame body 11, to hide at least a part of the thickness of the glue-pulling portion 122 by using the thickness of the middle frame body 11 in the shaft region 113, so as to reduce the thickness of the middle frame 1 in the shaft region 113, and requirements of the foldable electronic device 100 on structural strength of the middle frame 1 can be met while thinning the middle frame 1 in the shaft region 113.

It should be noted that, in this application, through disposition of the glue-pulling structure 114 and the injection molded part 12, the thickness of the middle frame 1 in the shaft region 113 can be within 0.6 mm, so as to meet requirements of the foldable electronic device 100 for lightening and thinning a new form.

The injection molded part 12 may be a plastic structure that is integrally injection-formed in the glue-pulling structure 114. A material of the plastic structure may include, but is not limited to, resin or another non-metal material that can be injected. The resin may include, but is not limited to, polyformaldehyde resin or a resin material that can be applied to the shaft region 113. In this application, the material of the injection molded part 12 is not further limited. Correspondingly, in a process in which the injection molded part 12 is injected onto the middle frame body 11, the injection molded body 121 and the glue-pulling portion 122 are also injected and formed in the glue-pulling structure 114.

The structure of the part of the injection molded body 121 and the part of the glue-pulling portion 122 on the side facing the shaft cover 21 may project from the surface of the middle frame body 11, so that when the injection molded part 12 supports the shaft cover 21, the middle frame body 11 can be prevented from contacting the shaft cover 21.

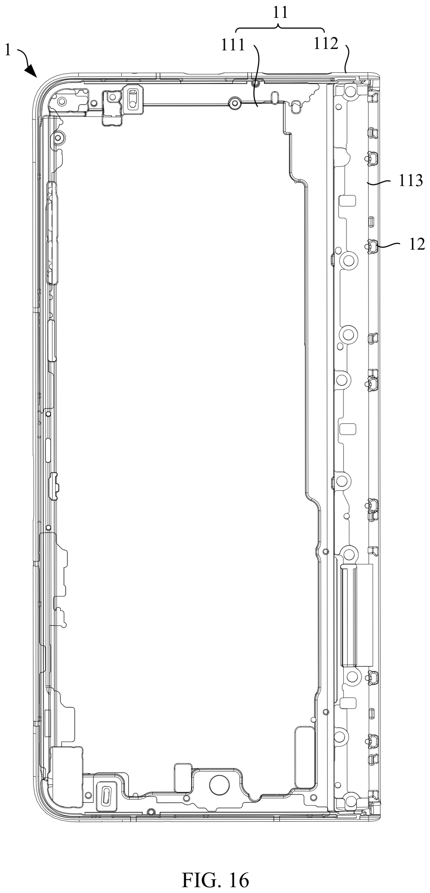

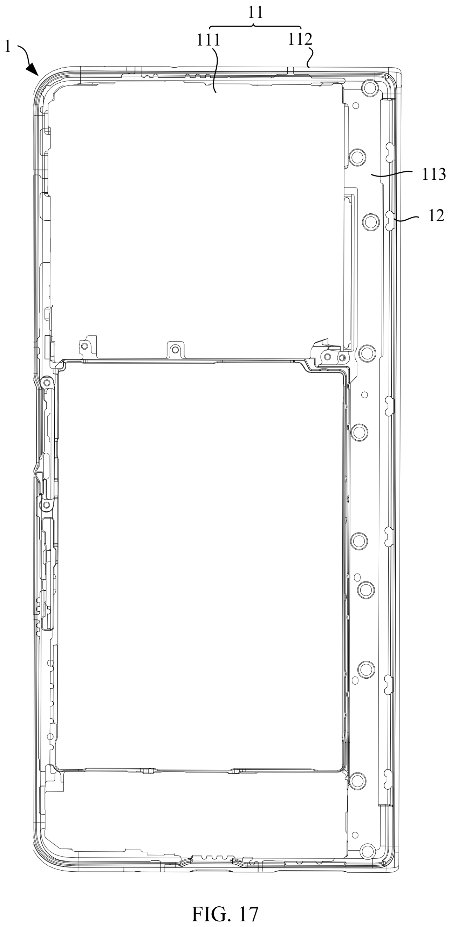

There are several glue-pulling structures 114, and the several glue-pulling structures 114 may be disposed at intervals in the shaft region 113 of the middle frame 1 along an axial direction of the shaft cover 21 (as shown in FIG. 10). For the axial direction of the shaft cover 21, refer to the foregoing Z direction. For example, the quantity of the glue-pulling structures 114 may be four, five, six, seven, eight, or the like. In this application, the quantity of the glue-pulling structures 114 on the middle frame body 11 is not further limited, so that the injection molded part 12 is formed in each glue-pulling structure 114 (not marked in the figure), thereby enhancing a supporting effect of the injection molded part 12 on the shaft cover 21. Reference may be made to FIG. 16 and FIG. 17 for assembly structures of the injection molded part 12 on opposite two sides of the middle frame body 11. FIG. 16 shows a structure of the injection molded part 12 on a side of the middle frame body facing the shaft cover 21. FIG. 17 shows a structure of the injection molded part 12 on a side of the middle frame body facing the rear cover 3.

Referring to FIG. 16, the middle frame body 11 includes a middle plate 111 and a side frame 112. The side frame 112 is disposed around a peripheral side edge of a side of the middle plate 111 away from the shaft cover 21. A side edge of the middle plate 111 facing the shaft cover 21 defines a shaft region 113, so that the rotating shaft mechanism 2 can be assembled with a side edge of the middle plate 111, and rotate and connect two middle frames 1. In addition, by surrounding the peripheral side edge of the middle plate 111 with the side frame 112, an accommodating cavity for accommodating components such as a battery, a circuit board, and a camera module may be jointly formed with the middle plate 111.

It should be noted that, to implement assembly of the foldable screen 4 on the middle frame 1, except a part corresponding to the shaft region 113, the side frame 112 may extend to the side of the middle plate 111 facing the shaft cover 21, so that the foldable screen 4 can be fixed on the side frame 112. In addition, because there is no extension of the side frame 112 (the side frame 112 is not provided) at a position, corresponding to the shaft cover 21, of the middle plate 111 on a side facing the shaft cover 21, formation of the shaft region 113 and disposition of the rotating shaft mechanism 2 on the middle frame 1 are not affected.

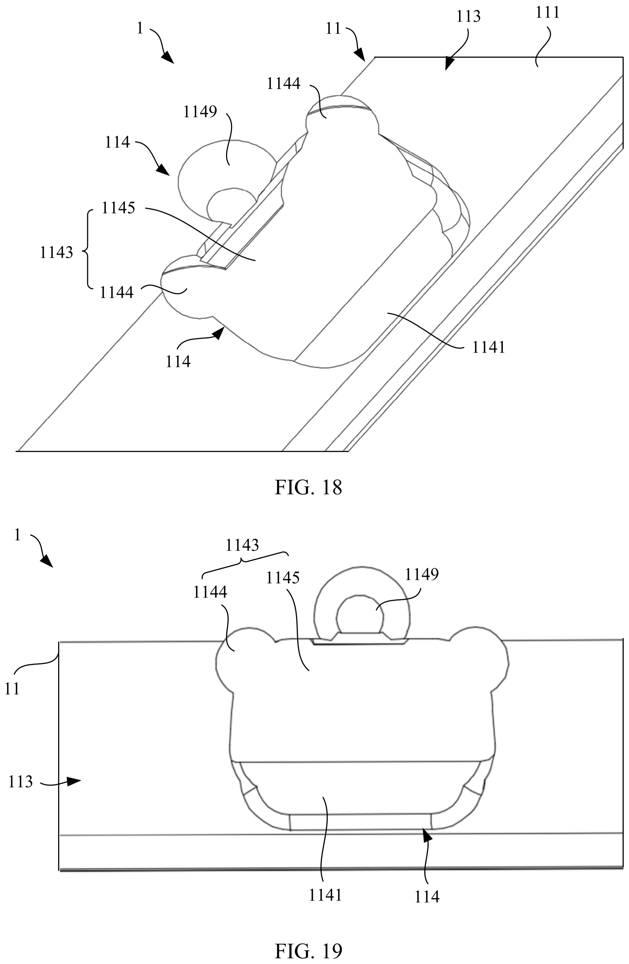

FIG. 18 is a first schematic structural diagram of a middle frame 1 at a glue-pulling structure 114.

Referring to FIG. 18, the glue-pulling groove 1141 is located at an edge of the middle plate 111 on a side of the shaft region 113, so that the injection molded body 121 can be formed on the side of the middle plate 111 in the shaft region 113, to ensure that the injection molded part 12 supports the shaft cover 21.

A position of the middle frame body 11 corresponding to the side frame 112 in the shaft region 113 has a larger thickness than another position of the middle frame body 11 in the shaft region 113.

Referring to FIG. 18 and with reference to FIG. 15, at least a part of the glue-pulling groove 1141 is located at a position of the middle plate 111 corresponding to the side frame 112 in the shaft region 113, to shorten a distance between the injection molded part 12 and an edge of the middle frame body 11, so that while the injection molded part 12 supports the shaft cover 21, a large-sized thin wall that is formed on the middle plate 111 due to disposition of the glue-pulling groove 1141 can be further avoided, affecting structural strength of the middle frame 1 at the glue-pulling groove 1141.

It should be noted that, in this application, thinning of the middle frame 1 in the shaft region 113 mainly refers to thinning of the shaft region 113 of the middle frame 1 in a region not corresponding to the side frame 112, so as to avoid that the thickness of the middle frame 1 in this region is excessively large, and affect the thickness of the middle frame 1 on one side of the foldable electronic device 100 after fitting with the rear cover 3.

The following further describes some possible structures of the glue-pulling structure 114 and the injection molded part 12 with reference to specific embodiments.

### Embodiment 1

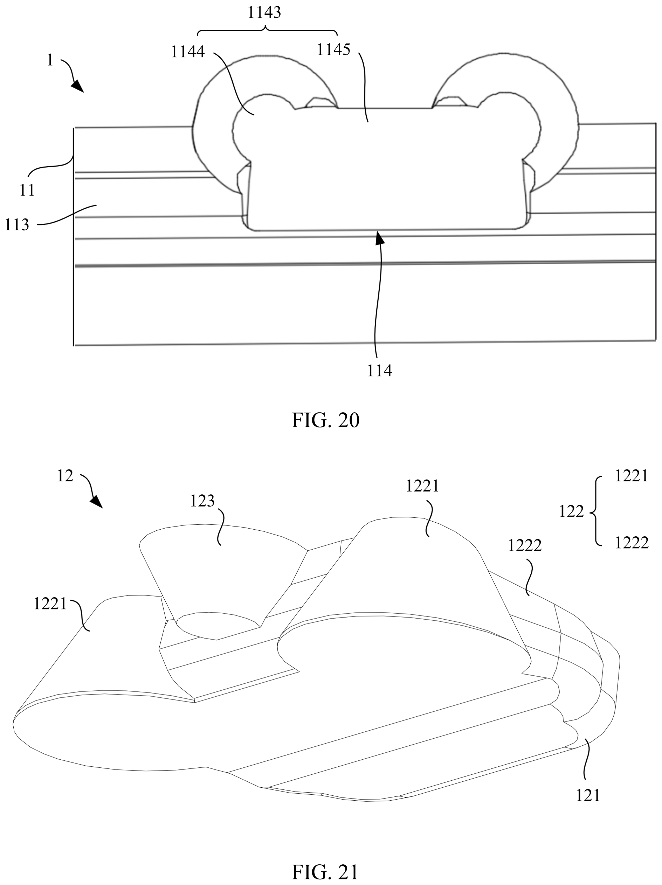

FIG. 19 is a schematic structural diagram of a side of the middle frame 1 facing the shaft cover 21 at the glue-pulling structure 114, and FIG. 20 is a schematic structural diagram of a side of the middle frame body 11 facing the rear cover 3 at the glue-pulling structure 114.

Referring to FIG. 19 and FIG. 20, the glue-pulling cavity 1143 includes a first position limiting cavity 1144 and a communicating cavity 1145 that communicate with each other, the first position limiting cavity 1144 is located on a lateral side of the glue-pulling groove 1141, the communicating cavity 1145 and the glue-pulling groove 1141 are located on a same side of the middle frame body 11, and the communicating cavity 1145 runs through the middle frame body 11 to a side opposite to the glue-pulling groove 1141 to communicate between the first position limiting cavity 1144 and the glue-pulling groove 1141, so that while the glue-pulling cavity 1143 is in communication with the glue-pulling groove 1141, the glue-pulling cavity 1143 can run through the middle frame body 11 to the side opposite to the glue-pulling groove 1141 by using the communicating cavity 1145. During an injection process, an injection material can be filled in the glue-pulling groove 1141, the communicating cavity 1145, and the first position limiting cavity 1144, so that the glue-pulling structure is filled with the injection molded part 12.

After the injection molded part 12 is filled in the glue-pulling cavity 1143, the thickness of the middle frame 1 in the shaft region 113 can be used to hide at least a part of the thickness of the injection molded part 12 in the communicating cavity 1145 and the first position limiting cavity 1144, so as to reduce the thickness of the middle frame 1 in the shaft region 113, thereby thinning the middle frame 1 in the shaft region 113, and meet requirements of the foldable electronic device 100 for lightening and thinning a new form and on strength of the middle frame 1.

A part of the communicating cavity 1145 is disposed at a groove bottom of the glue-pulling groove 1141, and is in communication with the glue-pulling groove 1141. The communicating cavity 1145 is a through hole on the middle frame body 11 that runs through the two opposite sides of the middle frame body 11. The through hole has the same radial size along the thickness direction of the middle frame 1, so that while communicating the first position limiting cavity 1144 and the glue-pulling groove 1141 through the communicating cavity 1145, it can simplify the glue-pulling structure 114, facilitate the processing of the middle frame body 11, and reduce processing costs of the middle frame 1. An opening shape of the communicating cavity 1145 may include, but is not limited to, an oblong shape, a rectangular shape, or another shape. In this application, the shape of the communicating cavity 1145 is not further limited.

In this embodiment, the first position limiting cavity 1144 may be a through-hole on the middle frame body 11. A radial size of the first position limiting cavity 1144 adjacent to one end of the shaft cover 21 is less than a radial size of the first position limiting cavity 1144 away from the shaft cover 21, so that when the first position limiting cavity 1144 communicates with the communicating cavity 1145, a glue-pulling cavity 1143 can be formed with the communicating cavity 1145, a structural size of the glue-pulling cavity 1143 on a side of the middle frame body 11 facing the shaft cover 21 is less than a structural size of the glue-pulling cavity 1143 on a side of the middle frame body 11 away from the shaft cover 21, so that after the injection molded part 12 is filled in the first position limiting cavity 1144, the injection molded part 12 can be fitted with the cavity wall of the first position limiting cavity 1144, so as to prevent the injection molded part 12 from being released from the side of the middle frame body 11 facing the shaft cover 21.

In addition, compared with disposition of glue-pulling holes having equal aperture in the thickness direction of the middle frame 1, through fitting between the first glue-pulling portion 1221 and the first position limiting cavity 1144, glue-pulling areas of the injection molded part 12 and the middle frame body 11 in the X direction and the Y direction of the foldable electronic device 100 can further be increased, thereby enhancing glue-pulling strength between the injection molded part 12 and the middle frame body 11 at the glue-pulling cavity 1143.

The structure of the middle frame 1 in this embodiment is further described below by using an example in which a radial size of one end of the first position limiting cavity 1144 adjacent to the shaft cover 21 is smaller than a radial size of one end of the first position limiting cavity 1144 away from the shaft cover 21.

The first position limiting cavity 1144 may be a horn hole (as shown in FIG. 21) whose radial size gradually decreases along the axial direction of the first position limiting cavity 1144. For the axial direction of the first position limiting cavity 1144, refer to the foregoing Z direction. One end of the first position limiting cavity 1144 whose radial size is larger is located on the side of the middle frame body 11 facing the rear cover 3, and one end of the first position limiting cavity 1144 whose radial size is smaller is located on the side of the middle frame body 11 facing the shaft cover 21, so that after the injection molded part 12 is fitted with and connected to the first position limiting cavity 1144, the injection molded part 12 can be prevented from being released from the side of the middle frame body 11 facing the shaft cover 21, thereby enhancing the strength of the glue-pulling strength between the injection molded part 12 and the middle frame body 11 at the glue-pulling cavity 1143.

In some embodiments, the first position limiting cavity 1144 may alternatively have another structure. For example, the first position limiting cavity 1144 may be a step hole (stepped hole) or another through-hole meeting requirements. In this application, the structure of the first position limiting cavity 1144 is not further limited.

The structure of the housing assembly of this application is further described below by using disposition of a horn hole of the first position limiting cavity 1144 as an example.

A quantity of the first position limiting cavities 1144 is at least two (for example, two or four). FIG. 21 shows two first position limiting cavities 1144. The at least two first position limiting cavities 1144 are symmetrically distributed on two sides of the glue-pulling groove 1141. Correspondingly, there are at least two first glue-pulling portions 1221, and the first glue-pulling portions 1221 are in a one-to-one correspondence with the first position limiting cavities 1144. In this way, through distribution of the first position limiting cavities 1144 on the middle frame body 11, not only uniformity of glue-pulling strength and bonding strength between the injection molded part 12 and the middle frame body 11 can be enhanced, but also the at least two first position limiting cavities 1144 can provide a better position limiting function for the injection molded part 12, so as to ensure that the injection molded part 12 can be stably disposed in the glue-pulling structure 114.

The first position limiting cavity 1144 is located on a side of the glue-pulling groove 1141 facing a middle portion of the middle frame body 11, so that after the injection molded part 12 is filled in the first position limiting cavity 1144, the thickness of the middle frame body 11 in the shaft region 113 can be used to hide at least a part of the thickness of the injection molded part 12, to thin the middle frame 1 in the shaft region 113 while ensuring that the injection molded part 12 has a sufficient thickness and glue-pulling strength at the first position limiting cavity 1144.

FIG. 21 to FIG. 24 respectively show schematic structural diagrams of the injection molded part 12 in FIG. 12 at different viewing angles, to better understand the structure of the injection molded part 12 in the middle frame 1.

Referring to FIG. 21 to FIG. 24, the glue-pulling portion 122 in this embodiment may include a first glue-pulling portion 1221 and a connecting portion 1222. The connecting portion 1222 is connected between the injection molded body 121 and the first glue-pulling portion 1221, and is filled in the communicating cavity 1145, so that while the injection molded body 121 is connected to the first glue-pulling portion 1221, at least a part of the thickness of the connecting portion 1222 can be hidden by using the thickness of the middle frame 1 in the shaft region 113.

The first glue-pulling portion 1221 is filled in the first position limiting cavity 1144, so that a structure matching a structure of the first position limiting cavity 1144 can be formed while at least a part of the thickness of the connecting portion 1222 is hidden by using the thickness of the middle frame 1 in the shaft region 113. That is, a radial size of a side of the first glue-pulling portion 1221 facing the shaft cover 21 is smaller than a radial size of a side of the first glue-pulling portion 1221 facing the rear cover 3, so that the first glue-pulling portion 1221 can be embedded in the first position limiting cavity 1144, and is fitted with and connected to the cavity wall of the first position limiting cavity 1144, and glue-pulling strength and bonding strength between the injection molded part 12 and the middle frame body 11 are enhanced, so that the injection molded part 12 can be prevented from being released from the side of the middle frame body 11 facing the rear cover 3.

To further enhance the glue-pulling strength between the injection molded part 12 and the middle frame body 11, in some embodiments, the glue-pulling structure 114 may further include a second position limiting cavity 1149 (as shown in FIG. 20). The second position limiting cavity 1149 communicates with a side of the communicating cavity 1145, and is located on a same side of the middle frame body 11 as the glue-pulling groove 1141. A radial size of one end of the second position limiting cavity 1149 adjacent to the shaft cover 21 may be greater than a radial size of one end of the second position limiting cavity 1149 away from the shaft cover 21. The injection molded part 12 is filled in the second position limiting cavity 1149, to further increase a glue-pulling area between the injection molded part 12 and the middle frame body 11 in the X direction and the Y direction of the foldable electronic device 100, and enhance the glue-pulling strength between the injection molded part 12 and the middle frame body 11. In addition, after the injection molded part 12 is filled in the second position limiting cavity 1149, a structure matching the structure of the second position limiting cavity 1149 can be formed, so as to further prevent, through fitting between the injection molded part 12 and a cavity wall of the second position limiting cavity 1149, the injection molded part 12 from being released from the side of the middle frame body 11 facing the rear cover 3.

Compared with disposition of the through-holes having the same aperture in the thickness direction of the middle frame 1, through fitting between the injection molded part 12 and the second position limiting cavity 1149, the glue-pulling area between the injection molded part 12 and the middle frame body 11 in the X direction and the Y direction of the foldable electronic device 100 can further be increased, thereby enhancing the glue-pulling strength between the injection molded part 12 and the middle frame body 11.

In some embodiments, the second position limiting cavity 1149 may be a horn hole whose radial size gradually decreases along an axial direction of the second position limiting cavity 1149. For the axial direction of the second position limiting cavity 1149, refer to the foregoing Z direction. Alternatively, same as the first position limiting cavity 1144, the second position limiting cavity 1149 may alternatively be a step hole (stepped hole) or another through-hole meeting requirements. In this application, the structure of the second position limiting cavity 1149 is not further limited.

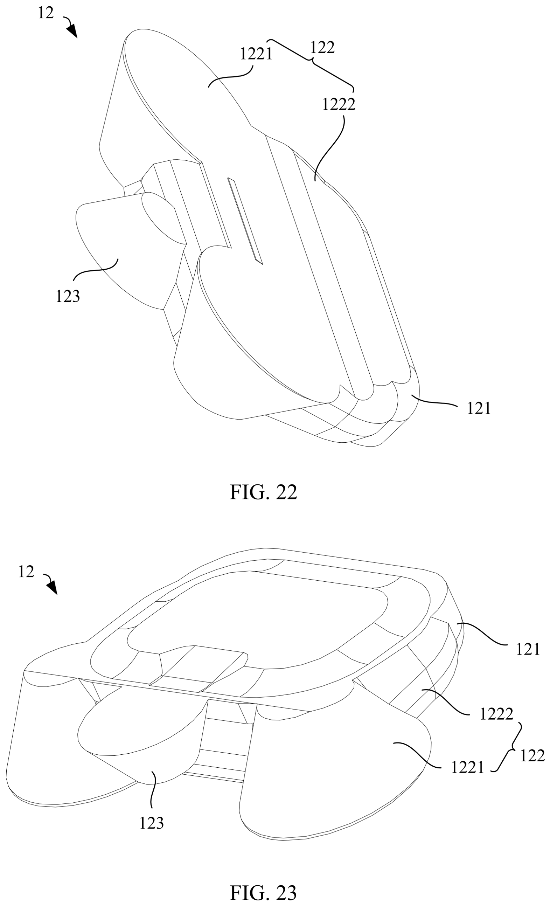

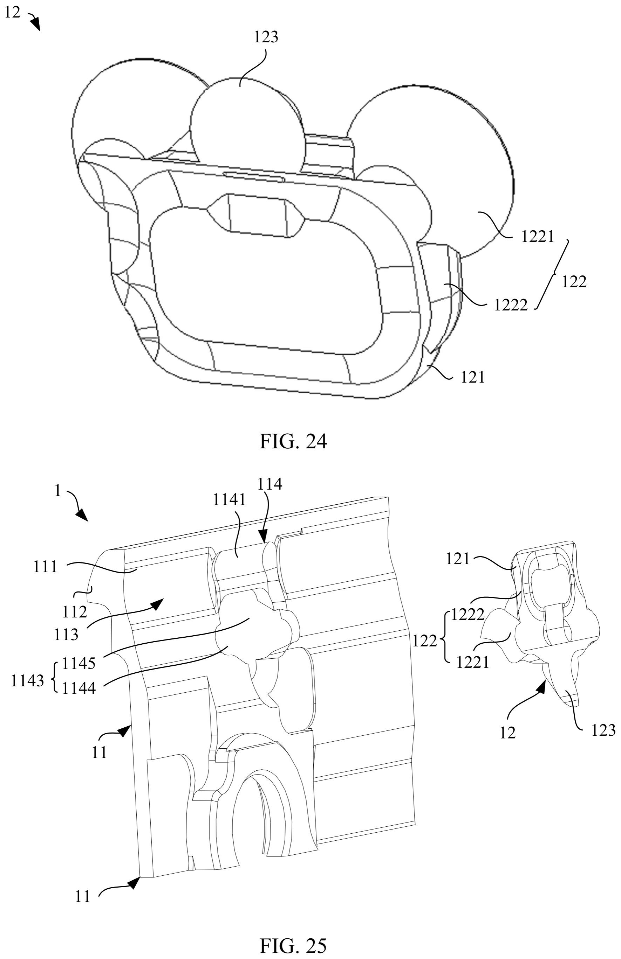

Referring to FIG. 23 and FIG. 24, in some embodiments, the injection molded part 12 may further include a second glue-pulling portion 123. The second glue-pulling portion 123 is connected to a lateral side of the connecting portion 1222 and is filled in the second position limiting cavity 1149, so as to further increase a glue-pulling area and glue-pulling strength between the middle frame body 11 and the injection molded part 12 through fitting and connection between the second glue-pulling portion 123 and the second position limiting cavity 1149.

A structure of the second glue-pulling portion 123 matches a structure of the second position limiting cavity 1149. That is, a structural size of one end of the second glue-pulling portion 123 adjacent to the shaft cover 21 may be greater than a structural size of one end of the second glue-pulling portion 123 away from the shaft cover 21. In this way, through fitting and connection between the second glue-pulling portion 123 and the hole wall of the second position limiting cavity 1149, the injection molded part 12 can be prevented from being released from the side of the middle frame body 11 away from the shaft cover 21.

The structure of the housing assembly of this application is further described below by using disposition of a horn hole of the second position limiting cavity 1149 as an example.

The second position limiting cavity 1149 is located between two adjacent first position limiting cavities 1144 (as shown in FIG. 20), so that the space of the middle frame body 11 between the two first position limiting cavities 1144 is properly used, to implement disposition of the second position limiting cavity 1149 on the middle frame body 11.

In some embodiments, the second position limiting cavity 1149 is a blind hole (as shown in FIG. 21) of the middle frame body 11 on a side of the shaft region 113, so that a quantity of openings in the middle frame body 11 can be reduced when the second glue-pulling portion 123 is formed. Alternatively, in some embodiments, the second position limiting cavity 1149 is a through-hole of the middle frame body 11 on a side of the shaft region 113. In this way, structures of the glue-pulling structure 114 and the injection molded part 12 can be diversified.

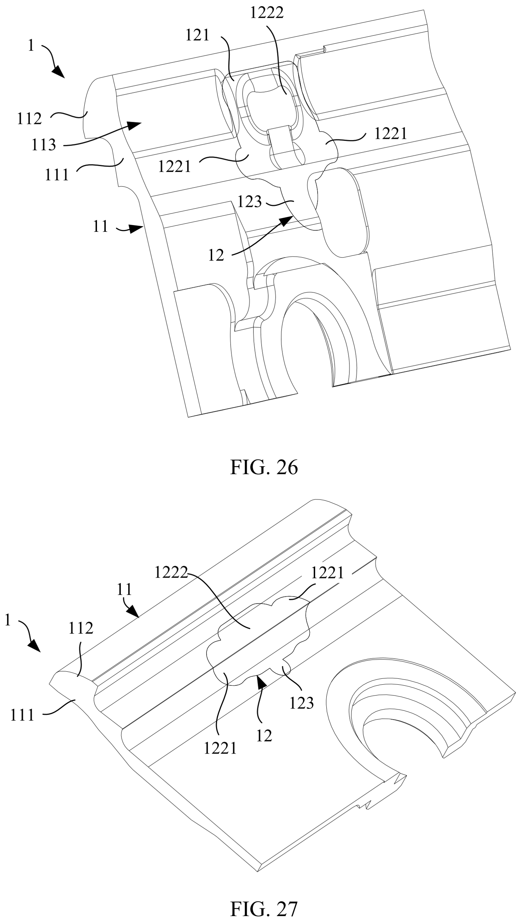

FIG. 25 is an exploded view of another middle frame 1 at a glue-pulling structure 114; FIG. 26 is a first assembly diagram of the injection molded part 12 in FIG. 25 in the middle frame body 11; and FIG. 27 is a second assembly diagram of the injection molded part 12 in FIG. 25 in the middle frame body 11.

It should be noted that the shape of the glue-pulling structure 114 and the shape of the injection molded part 12 are not limited to the structures shown in FIG. 19 and FIG. 21. In some embodiments, based on the foregoing descriptions, many variant structures may further be derived from the glue-pulling structure 114 and the injection molded part 12. For example, the glue-pulling structure 114 and the structure of the injection molded part 12 may be shown in FIG. 25. Correspondingly, reference may be made to FIG. 26 and FIG. 27 for an assembly effect of the injection molded part 12 on the middle frame body 11.

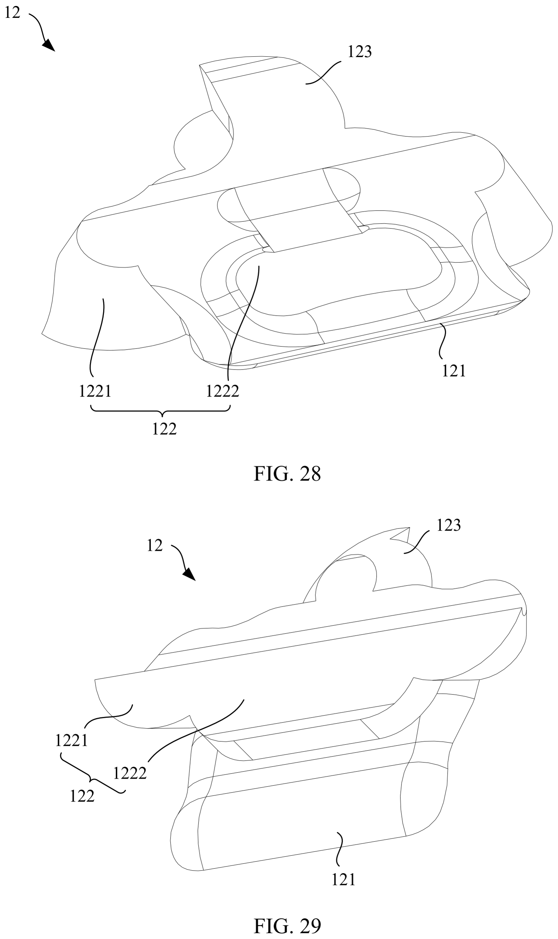

It should be noted that, the glue-pulling structure 114 in FIG. 25 also includes a first position limiting cavity 1144, a communicating cavity 1145, and a glue-pulling groove 1141. For structures and disposition positions of parts in the glue-pulling structure 114, refer to related descriptions of the foregoing parts in Embodiment 1. Similarly, the injection molded part 12 also includes an injection molded body 121, a connecting portion 1222, a first glue-pulling portion 1221, and a second glue-pulling portion 123. Specifically, for a structure of the injection molded part 12, refer to structures in FIG. 28 to FIG. 30, and details are not described herein again.

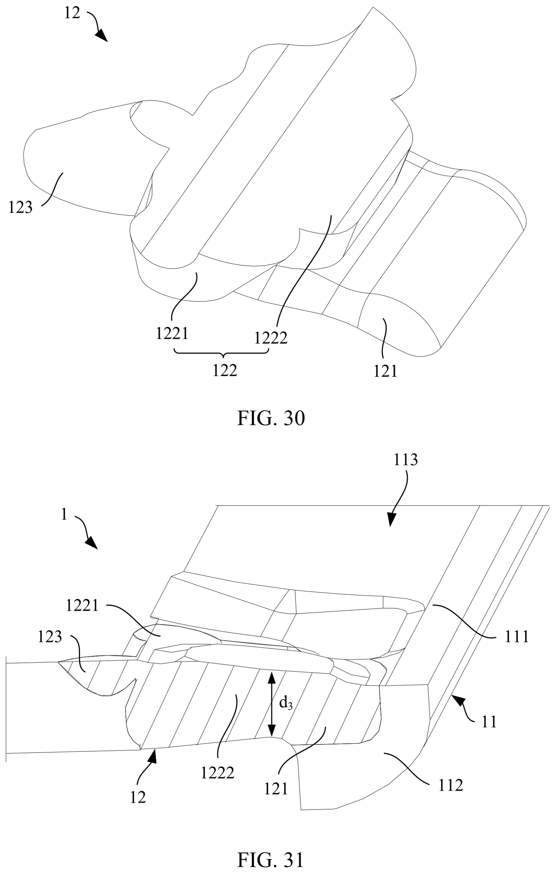

FIG. 31 is a cross sectional view of a middle frame 1 in FIG. 16 at an injection molded part 12, so as to further describe a thickness of the middle frame 1 in the shaft region 113 by using the middle frame 1 in FIG. 16 as an example.

Referring to FIG. 31, a minimum thickness of the shaft region 113 of the middle frame 1 may be less than 0.6 mm. Because of disposition of the communicating cavity 1145 and the first position limiting cavity 1144, the thickness of the shaft region 113 of the middle frame 1 at the communicating cavity 1145 is the smallest, and a thickness d₃ at the communicating cavity 1145 may be greater than or equal to 0.33 mm and less than 0.6 mm. For example, the thickness d₃ may be 0.35 mm, 0.45 mm, 0.50 mm, or 0.52 mm. Compared with the middle frame 1 in the related technology (the minimum thickness of the shaft region 113 is greater than 0.6 mm), in this embodiment, the middle frame 1 can be thinned in the shaft region 113 through disposition of the glue-pulling cavity 1143.

### Embodiment 2

A middle frame 1 of this embodiment is different from that of Embodiment 1 in that a structure of a glue-pulling cavity 1143 is different. The following further describes, with reference to the accompanying drawings, a part that is in this embodiment and that is different from the middle frame 1 in Embodiment 1.

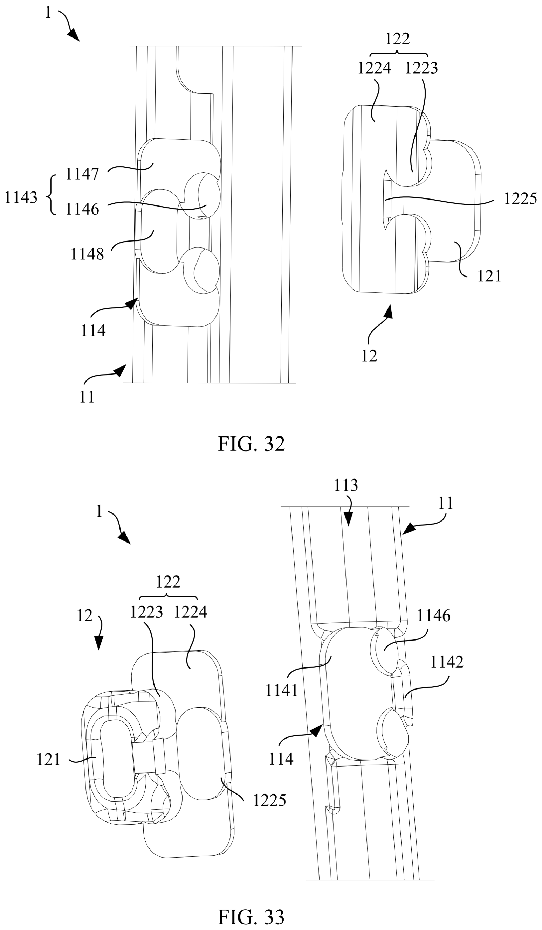

FIG. 32 and FIG. 33 respectively show exploded views of still another middle frame 1 at a glue-pulling structure 114 at different viewing angles.

Referring to FIG. 32 and FIG. 33, the glue-pulling cavity 1143 of this embodiment also includes a communicating cavity 1146 and a first position limiting cavity 1147. Similar to Embodiment 1, a part of the communicating cavity 1146 is disposed at a bottom of the glue-pulling groove 1141, and is in communication with the glue-pulling groove 1141.

Referring to FIG. 32 and FIG. 33, in some embodiments, the communicating cavity 1146 may be a through-hole on the middle frame body 11, and radial sizes of the communicating cavities 1146 in a thickness direction of the middle frame 1 are all equal, so as to run through two opposite sides of the middle frame body 11. For the thickness direction of the middle frame 1, refer to the foregoing Z direction.

The glue-pulling cavity 1143 may further include a first position limiting cavity 1147. The first position limiting cavity 1147 is located on a side of the middle frame body 11 opposite to the glue-pulling groove 1141. That is, the first position limiting cavity 1147 and the glue-pulling groove 1141 are located on two opposite sides of the middle frame body 11. A radial size of the first position limiting cavity 1147 is greater than a radial size of the communicating cavity 1146, so that the glue-pulling cavity 1143 can be formed after the first position limiting cavity 1147 communicates with the communicating cavity 1146, to ensure that the size of the glue-pulling cavity 1143 on the side of the middle frame body 11 facing the shaft cover 21 is smaller than the size of the glue-pulling cavity 1143 on the side of the middle frame body 11 away from the shaft cover 21, so that after the injection molded part 12 is filled in the glue-pulling cavity 1143, the glue-pulling area and the glue-pulling strength between the injection molded part 12 and the middle frame body 11 can be enhanced, so as to prevent the injection molded part 12 from being released from the side of the middle frame body 11 facing the shaft cover 21.

The first position limiting cavity 1147 is a groove located on a lateral side of the communicating cavity 1146, a groove bottom of the groove communicates with the communicating cavity 1146, and a groove opening of the groove faces a side away from the glue-pulling groove 1141. That is, the first position limiting cavity 1147 is located on a side of the middle frame body 11 away from the shaft cover 21. The communicating cavity 1146 is connected to the glue-pulling groove 1141, so that after an injection process, an injection material can be filled in the glue-pulling groove 1141, the communicating cavity 1146, and the first position limiting cavity 1147. The glue-pulling structure 114 is filled with the injection molded part 12, to increase the glue-pulling area between the injection molded part 12 and the middle frame body 11 in the X direction and the Y direction in the foldable electronic device 100, and enhance glue-pulling strength and bonding strength between the injection molded part 12 and the middle frame body 11.

After the injection molded part 12 is filled in the glue-pulling cavity 1143, the thickness of the middle frame 1 in the shaft region 113 can be used to hide at least a part of the thickness of the injection molded part 12 in the communicating cavity 1145, so as to reduce the thickness of the middle frame 1 in the shaft region 113, thereby thinning the middle frame 1 in the shaft region 113, and meet requirements of the foldable electronic device 100 for lightening and thinning a new form and on strength of the middle frame 1.

In addition, because the first position limiting cavity 1147 is located on a side of the middle frame body 11 away from the shaft cover 21, design of a structural size of the formed glue-pulling cavity 1143 meets the foregoing requirement. That is, a structural size of a side of the middle frame body 11 facing the shaft cover 21 in the glue-pulling cavity 1143 is smaller than a structural size of a side of the middle frame body 11 away from the shaft cover 21. In this way, after the injection molded part 12 is filled in the first position limiting cavity 1147, the injection molded part 12 can fit with the cavity wall of the first position limiting cavity 1144, and is snapped onto the side of the middle frame body 11 facing the rear cover 3, so as to prevent the injection molded part 12 from being released from the side of the middle frame body 11 facing the shaft cover 21.

In this embodiment, through disposition of the groove of the first position limiting cavity 1147, the radial size of the communicating cavity 1146 on the side of the middle frame body 11 facing the rear cover 3 can be reduced, a crack area on the middle frame body 11 can be reduced, and structural strength of the middle frame 1 can be enhanced.

Both the groove bottom of the groove and a groove bottom of the glue-pulling groove 1141 are flat surfaces on the middle frame body 11, so that the injection molded part 12 can be in flat contact with the middle frame body 11 at the groove bottom of the groove and the groove bottom of the glue-pulling groove 1141, and glue-pulling strength between the injection molded part 12 and the middle frame body 11 is enhanced, so that the injection molded part 12 can be snapped onto two sides of the middle frame body 11, to prevent the injection molded part 12 from being released from the middle frame body 11.

The groove bottom of the first position limiting cavity 1147 further has a reinforcing groove 1148 (referring to FIG. 32), so that on the basis of not affecting the thickness of the middle frame 1 at the first position limiting cavity 1147, a glue-pulling area of the middle frame body 11 for the injection molded part 12 can be increased by using the reinforcing groove 1148, so that the structural strength of the middle frame 1 at the first position limiting cavity 1147 is further enhanced through fitting and connection between the injection molded part 12 and a groove wall of the reinforcing groove 1148.

There are at least two (for example, two or four) communicating cavities 1146. Two communicating cavities 1146 are shown in FIG. 32. The at least two communicating cavities 1146 are symmetrically distributed on two sides of the glue-pulling groove 1141, so that through distribution of the communicating cavities 1146 and the connecting portion 1223 on the middle frame body 11, not only uniformity of glue-pulling strength and bonding strength between the injection molded part 12 and the middle frame body 11 can be enhanced, but also the at least two communicating cavities 1146 can provide a better position limiting function for the injection molded part 12, so as to ensure that the injection molded part 12 can be stably disposed in the glue-pulling structure 114.

The groove bottom of the glue-pulling groove 1141 further has a second reinforcing protrusion 1142. The second reinforcing protrusion 1142 is located between two adjacent communicating cavities 1146, and is connected to the injection molded part 12 (as shown in FIG. 33), so that while forming of the injection molded part 12 in the glue-pulling structure 114 and supporting of the injection molded part 12 to the shaft cover 21 are not affected, not only a glue-pulling area of the middle frame body 11 for the injection molded part 12 can be further increased by using the second reinforcing protrusion 1142, but also structural strength of the middle frame body 1 at the second reinforcing protrusion 1142 can be enhanced while bonding strength between the middle frame body 11 and the injection molded part 12 is enhanced.

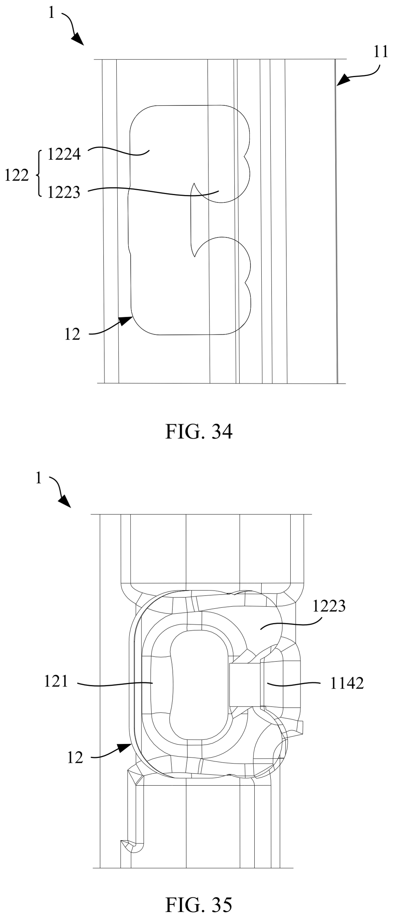

FIG. 34 is a schematic structural diagram of the middle frame 1 in FIG. 32 at an injection molded part 12, and FIG. 35 is a schematic structural diagram of the middle frame 1 in FIG. 33 at an injection molded part 12.

Referring to FIG. 32 to FIG. 35, the glue-pulling portion 122 also includes a connecting portion 1223 filled in the communicating cavity 1146, and a first glue-pulling portion 1224 filled in the first position limiting cavity. In this embodiment, the first glue-pulling portion 1224 is still indirectly connected to the injection molded body 121 by using the connecting portion 1223. The first glue-pulling portion 1221 is snapped with the middle frame body 11 in the first position limiting cavity, so as to prevent the injection molded part 12 from being released from a side of the middle frame body facing the shaft cover 21. Same as Embodiment 1, the connecting portion 1222 can hide at least a part of the thickness of the middle frame body 11 by using the thickness of the middle frame body 11 at the communicating cavity 1146, to reduce the thickness of the middle frame 1 at the injection molded part 12 in the shaft region 113.

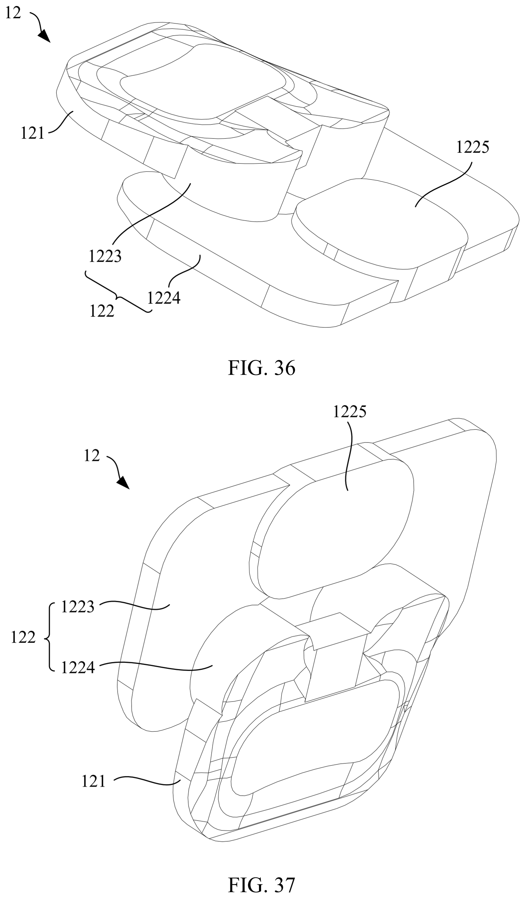

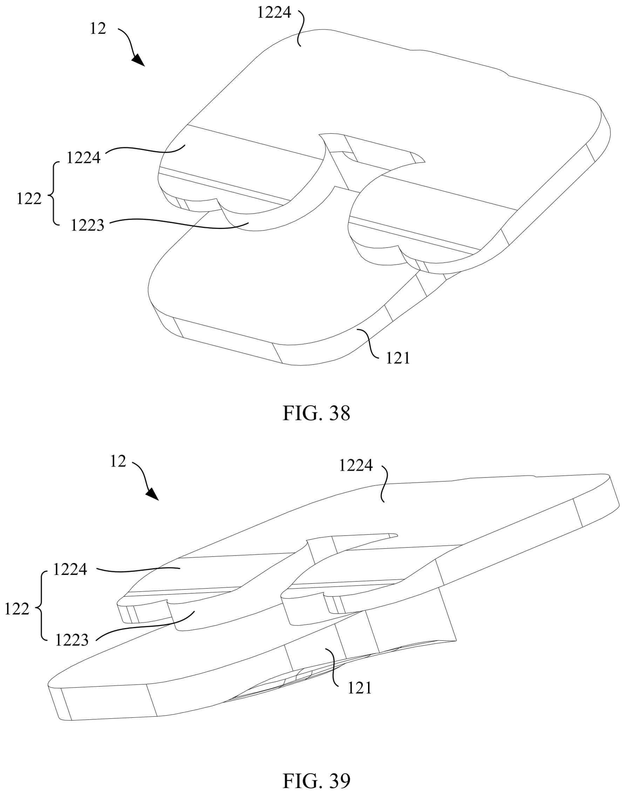

FIG. 36 to FIG. 39 are schematic structural diagrams of the injection molded part 12 in FIG. 33 at different viewing angles.

Referring to FIG. 36 to FIG. 39, the thickness of the connecting portion 1223 may be greater than the thickness of the injection molded body 121, so that while the connecting portion 1223 connects the injection molded body 121 to the first glue-pulling portion 1224, the first glue-pulling portion 1224 and the injection molded body 121 may be located at two opposite sides of the middle frame body 11 of the middle frame 1, so as to properly strengthen a thickness and structural strength of the middle frame 1 at the glue-pulling groove 1141 and the first position limiting cavity 1147, and strengthen glue-pulling strength between the injection molded part 12 and the middle frame body 11. A direction in which the thickness of the connecting portion 1223 is located is the same as that in which the thickness of the injection molded body 121 is located. For reference, refer to the foregoing Z direction.

When the glue-pulling structure 114 includes the reinforcing groove 1148, a surface of the first glue-pulling portion 1224 facing the injection molded body 121 has the first reinforcing protrusion 1225 (referring to FIG. 33), and the first reinforcing protrusion 1225 is formed in the reinforcing groove 1148. For an assembly effect of the injection molded part 12 on the middle frame body 11, refer to FIG. 34 and FIG. 35, and details are not described herein again.

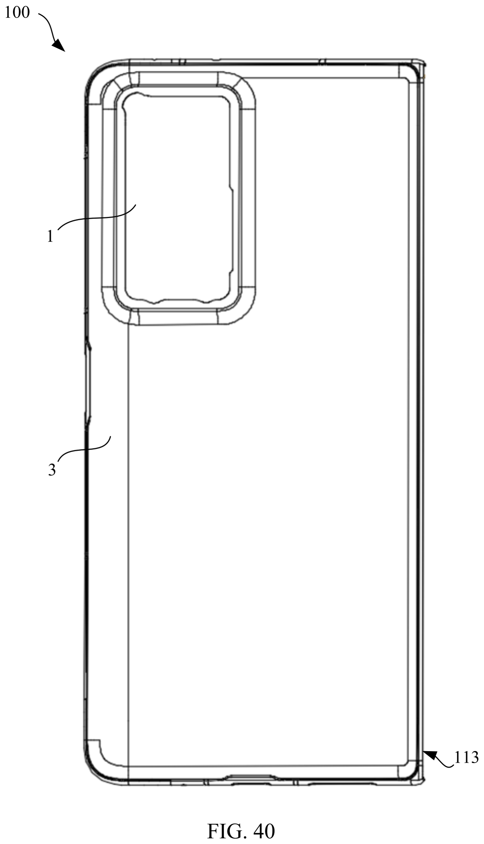

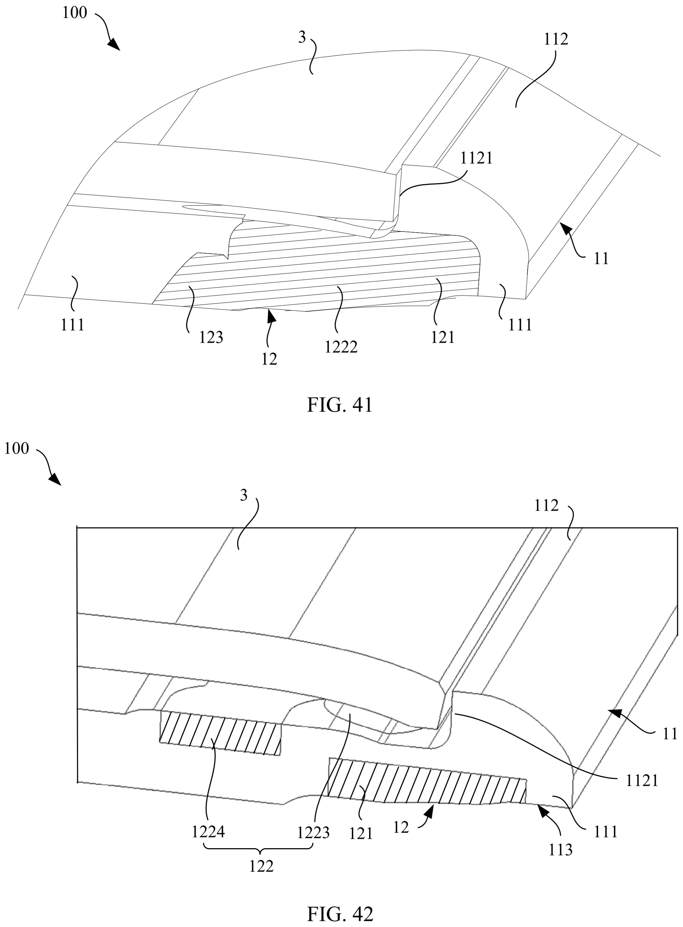

FIG. 40 is an assembly view of the middle frame 1 in FIG. 17 and the rear cover 3, and FIG. 41 is a cross sectional view of the middle frame 1 in FIG. 40 at an injection molded part 12.

Referring to FIG. 40 and FIG. 41, the rear cover 3 may be assembled on a side of the middle frame 1 opposite to the shaft cover 21, and fit with a side wall of the side frame 112 of the middle frame 1, so as to assemble the rear cover 3 on the middle frame 1. The side wall of the side frame 112 forms a fitting surface 1121 on which the middle frame body 11 fits with the rear cover 3.

Referring to FIG. 41, due to reasons such as a material tolerance of the rear cover 3 and an assembly tolerance of the rear cover 3 on the middle frame 1, a relatively large gap may be caused between the rear cover 3 and the fitting surface 1121. The injection molded part 12 is generally of a plastic structure having a specific color. In this way, when the gap between the rear cover 3 and the fitting surface 1121 is relatively large, a position of the injection molded part 12 corresponding to the gap may be exposed to the outside of the foldable electronic device 100, affecting user experience of the foldable electronic device 100.

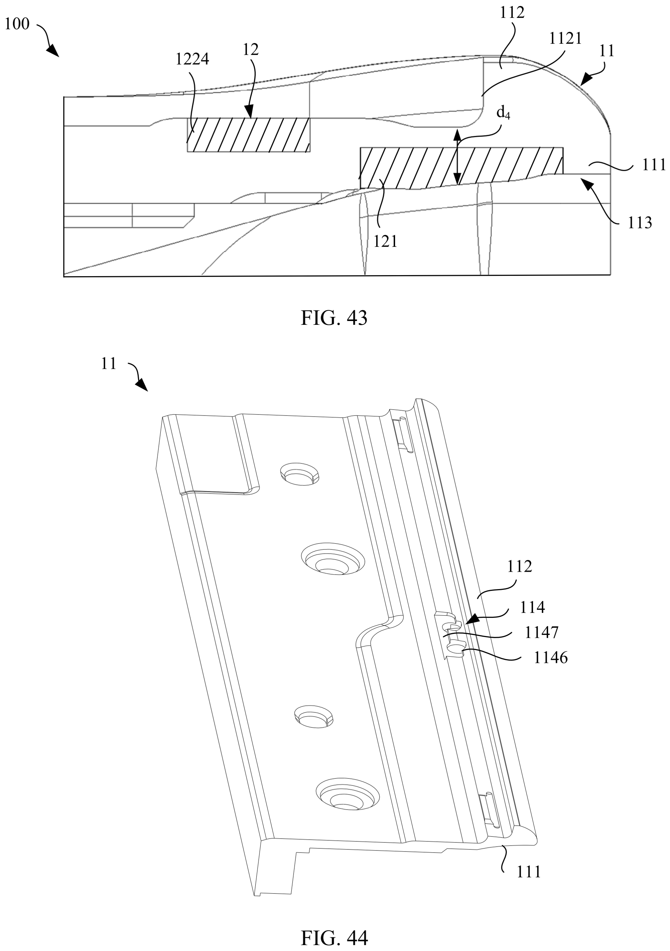

Therefore, FIG. 42 and FIG. 43 respectively show cross-sectional views, at different viewing angles, of the injection molded part 12 after the rear cover 3 is assembled to the middle frame 1 in FIG. 34. Referring to FIG. 42 and FIG. 43, the communicating cavity 1146 may be located on a side of the glue-pulling groove 1141 away from an edge of the middle frame body 11, and the first position limiting cavity 1147 may be located on a side of the communicating cavity 1146 away from the glue-pulling groove 1141, so as to make the injection molded part 12, on a side of the middle frame body 11 facing the rear cover 3 while ensuring that the injection molded part 12 can support the shaft cover 21, be as far as possible away from the fitting surface 1121 that is on the middle frame body 11 and that fits with the rear cover 3, to achieve an effect that the injection molded part 12 is retracted toward a middle portion (a middle region) side of the middle frame body 11 (the injection molded part 12 is retracted), helping prevent the injection molded part 12 from being exposed to the outside of the foldable electronic device 100 from a side of the rear cover 3 to improve user experience of the foldable electronic device 100.

In addition, the first position limiting cavity 1147 may be located on a side of the communicating cavity 1146 away from the edge of the middle frame body 11, so that the first position limiting cavity 1147 and the glue-pulling groove 1141 are distributed on two sides of the communicating cavity 1146. This not only can prevent structural strength of the middle frame body 11 from being affected when the first position limiting cavity 1147 and the glue-pulling groove 1141 are disposed on a same side of the communicating cavity 1146, but also can facilitate processing of the middle frame body 11.

It should be noted that, the first position limiting cavity 1147 and the communicating cavity 1146 are located in a projection range (for example, a projection range along the Z direction) of the rear cover 3 on the middle plate 111, so as to prevent the injection molded part 12 from being exposed to the outside of the foldable electronic device 100 through the gap between the rear cover 3 and the fitting surface 1121. In this application, when viewed from the gap between the rear cover 3 and the fitting surface 1121, only the middle frame body 11 can be seen.

It should be noted that, in this application, a distance between the injection molded part 12 and the fitting surface 1121 is not further limited, provided that it is ensured that the connecting portion 1223 is not exposed to the outside of the foldable electronic device 100. For example, the distance between the injection molded part 12 and the fitting surface 1121 may be less than or equal to 0.3 mm.

Still referring to FIG. 43, a minimum thickness of the shaft region 113 of the middle frame 1 in this embodiment may be less than 0.6 mm. A minimum thickness d₄ of the shaft region 113 of the middle frame 1 in this embodiment at the injection molded part 12 may be greater than or equal to 0.33 mm and less than 0.6 mm. For example, the minimum thickness d₄ may be, for example, 0.35 mm, 0.41 mm, 0.42 mm, or 0.52 mm. When the minimum thickness d₄ of the middle frame 1 is 0.41 mm, the thickness of the middle frame body 11 at the middle frame 1 may be 0.19 mm, and the thickness of the injection molded part 12 may be 0. 22 mm. Compared with the middle frame 1 in the related technology (the minimum thickness of the shaft region 113 is greater than 0.6 mm), in this embodiment, the middle frame 1 can be thinned in the shaft region 113 through disposition of the glue-pulling cavity 1143.

It should be noted that, a shape of the middle frame body 11 at the glue-pulling structure 114 in Embodiment 2 is not limited to that shown in FIG. 32 and FIG. 33. Many variant structures may be further derived from the glue-pulling structure 114 in Embodiment 2. A glue-pulling cavity 1143 of the variant structure includes a communicating cavity 1146 and a first position limiting cavity 1147.

A possible glue-pulling structure 114 on the middle frame body 11 is described below by using an example.

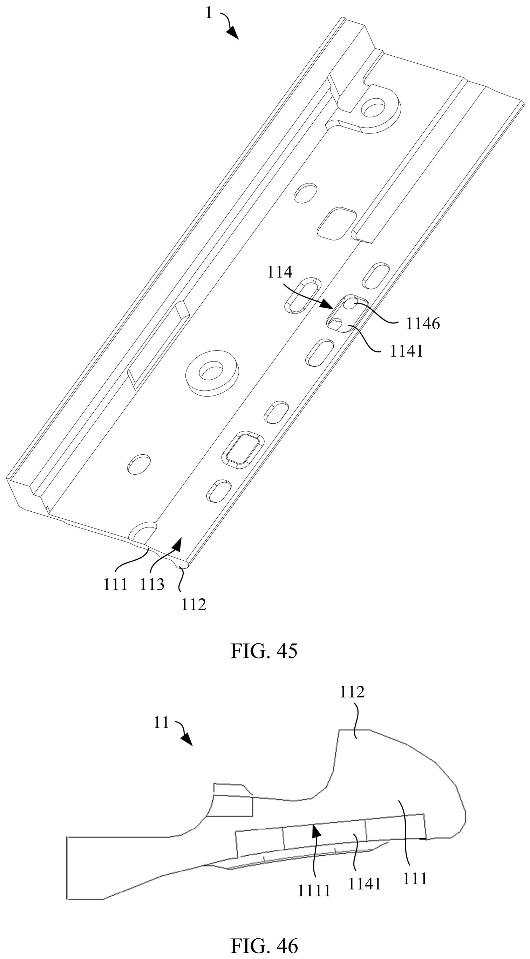

FIG. 44 and FIG. 45 respectively show schematic structural diagrams of still another middle frame body 11 at a glue-pulling structure 114 at different viewing angles. Referring to FIG. 44 and FIG. 45, in this example, a structural size of the first position limiting cavity 1147 is smaller than the structural size of the first position limiting cavity 1147 in FIG. 32, and the second reinforcing protrusion 1142 is disposed at a groove bottom of the first position limiting cavity 1147, so that an opening area of the glue-pulling cavity 1143 on the side of the middle frame body 11 facing the rear cover 3 can be reduced while the glue-pulling strength between the middle frame body 11 and the injection molded part 12 is enhanced.

It should be noted that, because the injection molded part 12 is integrally formed in the glue-pulling structure 114 through injection, when the glue-pulling structure 114 changes, the structure of the injection molded part 12 also changes. After being formed through injection, the outline structure of the injection molded part 12 matches (is the same as) the structure formed by the inner wall of the glue-pulling structure 114. Therefore, the structure of the injection molded part 12 matching FIG. 44 and FIG. 45 is not further described herein. For details, refer to the description about the related structure of the injection molded part 12 in Embodiment 2.

FIG. 46 is a schematic structural diagram of still another middle frame body 11 at a glue-pulling structure 114.

Referring to FIG. 46, in some embodiments, a groove bottom of the middle frame body 11 at the glue-pulling groove 1141 may further be an inclined surface 1111 that is on the middle frame body 11 and that is inclined to a side edge of a side frame 112 of the middle frame body 11, so as to further reduce, by using a thickness of the side frame 112, the thickness of the middle frame 1 at the injection molded part 12 in the shaft region 113, thereby implementing lightening and thinning of the middle frame 1 at the injection molded part 12 in the shaft region 113.

In addition to the foregoing rotating shaft mechanism 2, the foldable electronic device 100 of this application may further include the housing assembly of any foregoing embodiment. As described above, the shaft cover 21 of the rotating shaft mechanism 2 may be located in the shaft regions 113 of the two middle frames 1 in the housing assembly, and the two middle frames 1 are disposed on two sides of the shaft cover 21.

The housing assembly in this application may replace two original middle frames 1a in the foldable electronic device 100, and is assembled in the foldable electronic device 100, so as to implement assembly of the rotating shaft mechanism 2 between the two middle frames 1, and switch the foldable electronic device 100 between the flattened state and the folded state. In addition, because of disposition of the housing assembly, lightening and thinning of the foldable electronic device 100 in the shaft region 113 of the middle frame 1 on one side can be implemented, so as to meet a design requirement of a new form of the foldable electronic device 100, and also meet requirements of the foldable electronic device 100 for glue-pulling strength and bonding strength between the middle frame body 11 and the injection molded part 12 of the middle frame 1.

It should be noted that, for structures of the housing assembly and the rotating shaft mechanism 2, refer to related descriptions above, and details are not described herein again.

As described above, the foldable electronic device 100 further includes a rear cover 3, a foldable screen 4, and the like. For assembly positions of the rear cover 3 and the foldable screen 4 on the middle frame 1, refer to related descriptions above, and details are not described herein again.

In the descriptions of the embodiments of this application, it should be noted that, unless otherwise explicitly specified and defined, the terms "mount", "communicate", and "connect" should be understood in a broadest sense, for example, may be a fixed connection, an indirect connection by using an intermediate medium, or a connection between insides of two elements or an interaction relationship between the two elements. A person of ordinary skill in the art may understand specific meanings of the foregoing terms in the embodiments of this application based on a specific situation.

The terms "first", "second", "third", "fourth", and the like (if any) in this specification, the claims, and the accompanying drawings of the embodiments of this application are used to distinguish between similar objects without having to describe a specific order or sequence.

## Claims

1. A housing assembly, applied to a foldable electronic device, wherein the foldable electronic device comprises a rotating shaft mechanism; the housing assembly comprises two middle frames that are rotatably disposed respectively on two sides of the rotating shaft mechanism, each of the middle frames comprises a middle frame body and an injection molded part, and a side edge of the middle frame body defines a shaft region for disposing the rotating shaft mechanism;
the middle frame body has a glue-pulling structure in the shaft region, the glue-pulling structure comprises a glue-pulling groove and a glue-pulling cavity that are located on a same side of the middle frame body and that communicate with each other, and the glue-pulling cavity runs through the middle frame body to a side opposite to the glue-pulling groove; a size of the glue-pulling cavity on a side of the middle frame body facing a shaft cover of the rotating shaft mechanism is smaller than a size of the glue-pulling cavity on a side of the middle frame body away from the shaft cover; and the injection molded part is filled in the glue-pulling groove and the glue-pulling cavity, and is constructed to support the shaft cover.

2. The housing assembly according to claim 1, wherein the injection molded part comprises an injection molded body and a glue-pulling portion that are connected to each other, the injection molded body is filled in the glue-pulling groove, the shaft cover and the glue-pulling portion are filled in the glue-pulling cavity, and both the injection molded body and the glue-pulling portion are constructed to support the shaft cover.

3. The housing assembly according to claim 2, wherein the middle frame body comprises a middle plate and a side frame, the side frame is disposed around a peripheral side edge of a side of the middle plate away from the shaft cover, a side edge of the middle plate facing the shaft cover defines the shaft region, and the glue-pulling groove is located at an edge of the middle plate on a side of the shaft region.

4. The housing assembly according to claim 3, wherein at least a part of the glue-pulling groove is located at a position, of the middle plate in the shaft region, corresponding to the side frame, and an outer edge contour of the injection molded body fits a structure of the glue-pulling groove.

5. The housing assembly according to claim 2, wherein an outer edge shape of the glue-pulling portion fits a structure of the glue-pulling cavity.

6. The housing assembly according to any one of claims 1 to 5, wherein the glue-pulling cavity comprises a first position limiting cavity and a communicating cavity that communicate with each other, the first position limiting cavity is located on a lateral side of the glue-pulling groove, the communicating cavity and the glue-pulling groove are located on a same side of the middle frame body, and the communicating cavity runs through the middle frame body to a side opposite to the glue-pulling groove to communicate between the first position limiting cavity and the glue-pulling groove.

7. The housing assembly according to claim 6, wherein the first position limiting cavity is a through-hole on the middle frame body, a radial size of an end of the first position limiting cavity adjacent to the shaft cover is less than a radial size of an end of the first position limiting cavity away from the shaft cover, or a radial size of the first position limiting cavity is less than a radial size of the communicating cavity.

8. The housing assembly according to claim 7, wherein the first position limiting cavity is a horn hole whose radial size gradually decreases along an axial direction thereof.

9. The housing assembly according to claim 7, wherein the first position limiting cavity is located on a side of the glue-pulling groove facing a middle portion of the middle frame body.

10. The housing assembly according to any one of claims 7 to 9, wherein the glue-pulling structure further comprises a second position limiting cavity, and the second position limiting cavity communicates with a lateral side of the communicating cavity and is located on a same side of the middle frame body as the glue-pulling groove;
a radial size of an end of the second position limiting cavity adjacent to the shaft cover is greater than a radial size of an end of the second position limiting cavity away from the shaft cover; and the injection molded part is filled in the second position limiting cavity.

11. The housing assembly according to claim 10, wherein the second position limiting cavity is a horn hole whose radial size gradually decreases along an axial direction thereof.

12. The housing assembly according to claim 11, wherein there are at least two first position limiting cavities, the at least two first position limiting cavities are symmetrically distributed on two sides of the glue-pulling groove, and the second position limiting cavity is located between two adjacent first position limiting cavities.

13. The housing assembly according to claim 6, wherein the first position limiting cavity is located on a side of the middle frame body opposite to the glue-pulling groove, and a radial size of the first position limiting cavity is greater than a radial size of the communicating cavity.

14. The housing assembly according to claim 13, wherein the first position limiting cavity is a groove located on a lateral side of the communicating cavity, a groove bottom of the groove communicates with the communicating cavity, and a groove opening of the groove faces a side away from the glue-pulling groove.

15. The housing assembly according to claim 14, wherein the communicating cavity is located on a side of the glue-pulling groove away from an edge of the middle frame body, and the first position limiting cavity is located on a side of the communicating cavity away from the glue-pulling groove.

16. The housing assembly according to claim 15, wherein both the first position limiting cavity and the communicating cavity are located within a projection range of a rear cover of the foldable electronic device on the middle frame body.

17. The housing assembly according to claim 14, wherein both the groove bottom of the groove and a groove bottom of the glue-pulling groove are flat surfaces on the middle frame body.

18. The housing assembly according to claim 17, wherein the groove bottom of the groove further has a reinforcing groove.

19. The housing assembly according to any one of claims 13 to 18, wherein there are at least two communicating cavities, and the at least two communicating cavities are symmetrically distributed on two sides of the glue-pulling groove.

20. The housing assembly according to claim 19, wherein the groove bottom of the glue-pulling groove further has a second reinforcing protrusion, and the second reinforcing protrusion is located between two adjacent communicating cavities and is connected to the injection molded part.

21. The housing assembly according to any one of claims 1 to 20, wherein the groove bottom of the glue-pulling groove is an inclined surface that is on the middle frame body and that is inclined to a side edge of the side frame of the middle frame body.

22. The housing assembly according to any one of claims 1 to 20, wherein there are several glue-pulling structures, and the several glue-pulling structures are disposed in the shaft region at intervals in an axial direction of the shaft cover.

23. A foldable electronic device, comprising a rotating shaft mechanism and the housing assembly according to any one of claims 1 to 22, the rotating shaft mechanism comprising a shaft cover, the shaft cover being located in shaft regions of two middle frames in the housing assembly, and the two middle frames being rotatably disposed on two sides of the shaft cover.
